(19) Europäisches Patentamt
European Patent Office
Office européen des brevets

(11) **EP 3 762 457 B1**

(12) **EUROPÄISCHE PATENTSCHRIFT**

(45) Veröffentlichungstag und Bekanntmachung des Hinweises auf die Patenterteilung:
**16.04.2025   Patentblatt 2025/16**

(21) Anmeldenummer: **19707030.3**

(22) Anmeldetag: **04.03.2019**

(51) Internationale Patentklassifikation (IPC):
*C08L 69/00* (2006.01)    *C08L 55/02* (2006.01)
*C08L 51/04* (2006.01)

(52) Gemeinsame Patentklassifikation (CPC):
(C-Sets verfügbar)
**C08L 55/02; C08L 69/00**          (Forts.)

(86) Internationale Anmeldenummer:
**PCT/EP2019/055244**

(87) Internationale Veröffentlichungsnummer:
**WO 2019/170569 (12.09.2019 Gazette 2019/37)**

(54) **ARTIKEL FÜR LEBENSMITTELKONTAKTANWENDUNGEN**

ITEM FOR FOOD CONTACT APPLICATIONS

ARTICLE DESTINÉ À DES APPLICATIONS DE CONTACT AVEC UNE DENRÉE ALIMENTAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2018   EP 18160463**

(43) Veröffentlichungstag der Anmeldung:
**13.01.2021   Patentblatt 2021/02**

(73) Patentinhaber: **Covestro Deutschland AG**
**51373 Leverkusen (DE)**

(72) Erfinder:
• **SEIDEL, Andreas**
  **41542 Dormagen (DE)**
• **FRANZ, Uli**
  **42659 Solingen (DE)**
• **GUSTORF, Achim**
  **51429 Bergisch Gladbach (DE)**
• **HARRISON, David**
  **51519 Odenthal (DE)**

(74) Vertreter: **Levpat**
**c/o Covestro AG**
**Gebäude 4825**
**51365 Leverkusen (DE)**

(56) Entgegenhaltungen:
**EP-A2- 0 531 651      WO-A1-2017/186690**
**JP-A- 2010 035 470**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 55/02, C08L 69/00;**
**C08L 69/00, C08L 55/02**

**Beschreibung**

Die vorliegende Erfindung betrifft Formkörper ausgewählt aus der Gruppe bestehend aus Geschirr, Trinkgefäßen, Besteck, Schalen, Dosen und anderen Arten von Gefäßen, Tabletts und Gießformen für fetthaltige Lebensmittel.

Die Formkörper im Sinne der vorliegenden Anmeldung bestehen aus einer speziellen thermoplastischen Zusammensetzung. Die Formkörper können teilweise mit anderen Materialien überzogen oder mit anderen Materialien verbunden sein, beispielsweise in Form von Griffen oder Beschichtungen. Bei der bestimmungsgemäßen Verwendung des Formkörpers ist der Formkörper in direktem Kontakt mit den Fetten, Ölen oder fetthaltigen Lebensmittel.

Die Erfindung betrifft auch die Verwendung der thermoplastischen Zusammensetzung zur Herstellung der Formkörper als Teil eines Artikels enthaltend oder bestehend aus dem Formkörper, den Artikel selbst sowie die Verwendung der Artikel für den Transport, die Verpackung, die Lagerung, die Behandlung, die Herstellung, Zubereitung, Verarbeitung und Formgebung von den Fetten, Ölen oder fetthaltigen Lebensmitteln.

Weiterhin betrifft die Erfindung ein Verfahren zur Herstellung eines geformten fetthaltigen Lebensmittels.

Polycarbonat hat sich in vielfältiger Art und Weise als Werkstoff zur thermoplastischen Herstellung von Artikeln für Lebensmittelkontaktanwendungen bewährt. So werden aus Polycarbonat beispielsweise Getränkeflaschen, Geschirr, Trinkgefäße, Besteck, Schalen, Dosen und andere Arten von Gefäßen, Tabletts und auch Schokoladengießformen hergestellt. Der Vorteil von polymeren Thermoplasten gegenüber anderen Werkstoffen wie beispielsweise Glas, Porzellan oder Metall, die in diesen Anwendungsbereichen ebenfalls im Einsatz sind, ist dabei insbesondere die bessere Bruchbeständigkeit und das geringere Gewicht. Gegenüber Thermosets weisen Thermoplaste insbesondere Vorteile in einer einfacheren Massenherstellung sowie im Werkstoff-Recycling auf. Polycarbonat eignet sich als polymerer Thermoplast insbesondere wegen seiner im Vergleich zu anderen thermoplastischen Kunststoffen hohen Wärmeformbeständigkeit und seiner vorteilhaften Balance aus Steifigkeit, Zähigkeit und Härte.

Ein Nachteil von Polycarbonat ist jedoch dessen für einige Anwendungen unzureichende Spannungsrissbeständigkeit, insbesondere in Kontakt mit Fetten und Ölen oder fetthaltigen Lebensmitteln. Dies kann zu Beschädigungen von den Artikeln führen, die als Verpackung, zum Servieren, zur Lagerung und/oder zum Transport von Fetten, Ölen oder fetthaltigen Lebensmitteln, als Werkzeug zum Verzehr von Fetten, Ölen oder fetthaltigen Lebensmitteln, als Werkzeug zum Herstellen, Zubereiten, Formgeben und Verarbeiten von Fetten, Ölen oder fetthaltigen Lebensmitteln sowie als Teil von Maschinen zum Herstellen, Zubereiten, Formgeben und Verarbeiten von Fetten, Ölen oder fetthaltigen Lebensmittel eingesetzt werden.

Die Aufgabe bestand also in der Bereitstellung von Formkörpern ausgewählt aus der Gruppe bestehend aus Geschirr, Trinkgefäßen, Besteck, Schalen, Dosen und anderen Arten von Gefäßen, Tabletts und Gießformen für fetthaltige Lebensmittel., wobei die Formkörper aus thermoplastischen Zusammensetzungen bestehen mit einer gegenüber dem reinen Polycarbonat verbesserten Balance aus Schmelzefließfähigkeit und Spannungsrissbeständigkeit in Kontakt mit Fetten, Ölen und fetthaltigen Lebensmitteln.

Die Formkörper sollen dabei ein möglichst ähnliches Eigenschaftsprofil hinsichtlich Zähigkeit, Steifigkeit, Wärmeformbeständigkeit und Hydrolysebeständigkeit wie Formkörper aus reinem Polycarbonat aufweisen, damit die für Formkörperaus Polycarbonat etablierte Verwendung und Handhabung möglichst beibehalten werden kann.

Eine spezielle Form von solchen erfindungsgemäßen Formkörpern, wobei die Formkörper aus thermoplastischen Zusammensetzungen bestehen, sind Gießformen zum Formen von Fetten oder fetthaltigen Lebensmitteln, in die das Lebensmittel in erwärmter und dadurch geschmolzener Form eingefüllt wird, danach durch Abkühlen verfestig wird und nach dem Abkühlen die vorgegebene Form angenommen hat. Ein Beispiel für solche Formen sind Schokoladengießformen, die oft aus thermoplastischen Kunststoffen, besonders häufig aus Polycarbonat hergestellt werden.

EP 0 429 969 B1 offenbart eine kühlbare Schokoladenform aus Kunststoff.

DE-PS 1 283 661 offenbart eine metallisch verstärkte Schokoladenform aus Kunststoff.

DE-OS 18 06 244 offenbart ein Verfahren zur Formung und Verpackung von Fettglasurmassen bzw. Couvertüren sowie eine zur Durchführung dieses Verfahrens geeignete Form aus weichmacherfreiem thermoplastischem Kunststoff wie Polystyrol und Polypropylen.

EP 0 531 651 A3 offenbart eine Klappform für die Herstellung von Schokoladenhohlkörpern, wobei die Klappform aus zwei Hälften besteht, die jeweils aus einem Rahmen, einer beweglichen Rahmenhälfte und zwei Formeneinsätzen bestehen, wobei die Formeneinsätze auswechselbar in den Rahmen untergebracht sind und aus einem thermoplastischen Kunststoff bestehen. Als in Frage kommende Kunststoffe werden Polypropylen, Polycarbonat und Polyamid offenbart.

JP 2010 035470 A offenbart eine Schokoladengießform bestehend einem Kunststoff ausgewählt aus Polycarbonat, Polyamid und ungesättigten Nitrilverbindungen wie Acrylnitril oder Methacrylnitril. Die Form weißt weiterhin einen O-Ring auf, der schwarzes Eisenoxidpulver enthält und Fremdkörper aus der Schokolade entfernt.

WO 2017/186690 A1 offenbart Polycarbonat-ABS Zusammensetzungen und daraus hergestellte Formkörper. Es werden jedoch keine Formkörper für fetthaltige Lebensmittel offenbart.

Auf der Internet-Seite http://www.chocolat-chocolat.com/home/chocolate-molds/index.html mit dem Stand vom 23. Dezember 2017 werden Schokoladenformen aus Polycarbonat offenbart.

Schokoladengießformen gemäß dem Stand der Technik hergestellt aus Polycarbonat weisen durch die mangelhafte Spannungsrissbeständigkeit dieses Werkstoffs in Kontakt mit den Fetten der Kakaobutter, insbesondere bei der erhöhten Verarbeitungstemperatur der flüssigen Schokolade, eine begrenzte Produktlebenszeit auf. Weiterhin weisen die in Gießformen aus Polycarbonat hergestellten Schokoladenförmlinge im Allgemeinen eine bisweilen unerwünschte glänzende Oberflächenbeschaffenheit auf, da das Polycarbonat selbst eine hochglänzende Oberflächenkosmetik besitzt. Die Realisierung einer matten Erscheinungsform des Schokoladenförmlings über eine Oberflächentextur der Schokoladengießform im Sinne beispielsweise einer feinen Narbung führt häufig zu Problemen bei der Entformung des Schokoladenförmlings und stellt damit eine wenig geeignete technische Lösung dafür dar, die gewünschte Oberflächenbeschaffenheit des Schokoladenförmlings zu erzielen.

Ein weiterer Nachteil der Verwendung von Polycarbonat zur Herstellung von Schokoladengießformen ist die vergleichsweise schlechte Schmelzefließfähigkeit der thermoplastischen Formmassen. Diese begrenzt bei der Herstellung der Schokoladengießformen die erzielbaren Fließlängen bzw. Wanddicken und das Ausbilden von filigranen Strukturen und fein texturierten Oberflächen der Schokoladengießform. Dem kann durch Erhöhung der Verarbeitungstemperatur im Spritzguss zwar in bekannter Art und Weise entgegen gewirkt werden, jedoch führen solche erhöhten Verarbeitungstemperaturen im Allgemeinen zu Molekulargewichtsabbau und in Folge zu schlechteren mechanischen Eigenschaften der Schokoladengießformen, insbesondere zu einer weiteren Beeinträchtigung der Spannungsrissbeständigkeit solcher Formen in Kontakt mit Fetten und Ölen sowie fetthaltigen Lebensmitteln. Eine Verbesserung der Schmelzefließfähigkeit des Polycarbonat-Werkstoffs durch Reduktion dessen Molekulargewichtes ist insofern auch keine Option.

Es war daher wünschenswert, Gießformen zur Herstellung geformter Fette oder fetthaltiger Lebensmittel, insbesondere Schokoladengießformen, mit einer matteren Oberfläche bereitzustellen, wobei bei der Herstellung der Gießform im Spritzguss eine Spritzgussform aus Metall mit polierter Metalloberfläche zum Einsatz kommt und eine thermoplastische Zusammensetzung mit einer gegenüber dem reinen Polycarbonat verbesserten Balance aus Schmelzefließfähigkeit und Spannungsrissbeständigkeit, insbesondere in Kontakt mit Fetten und fetthaltigen Lebensmitteln verwendet wird, und wobei der derartig aus der thermoplastischen Zusammensetzung gefertigte Formkörper eine im Vergleich zum Einsatz von reinem Polycarbonat inhärent mattere Oberflächenkosmetik aufweist.

Diese Gießformen sollen dabei ein möglichst ähnliches Eigenschaftsprofil hinsichtlich Zähigkeit, Steifigkeit, Wärmeformbeständigkeit und Hydrolysebeständigkeit wie entsprechende Artikel aus reinem Polycarbonat aufweisen, damit die für solche Gießformen aus Polycarbonat etablierte Verwendung und Handhabung möglichst beibehalten werden kann.

Es ist bekannt, dass die Fließfähigkeit von Polycarbonat-Formmassen auch durch Zusatz von polymeren Blendpartnern verbessert werden kann. Thermoplastische Formmassen aus Polycarbonaten und beispielsweise Acrylnitril-Butadien-Styrol(ABS)-Polymerisaten (PC/ABS-Blends) sind seit langem in mannigfaltigen technischen Einsatz und zeigen gegenüber reinem Polycarbonat eine verbesserte Verarbeitbarkeit im Spritzguss. Solche Zusammensetzungen werden beispielsweise in DE-A 1 170 141 offenbart. US 4,526,926 offenbart speziell PC/ABS-Blends auf Basis von ABS-Polymerisaten hergestellt im Masse-Polymerisationsverfahren, welche sich durch verbesserte Verarbeitbarkeit, gute Schlagzähigkeit und Wärmebeständigkeit und niedrigen Glanzgrad auszeichnen.

Bei Zusatz von Blend-Partnern zur Erzielung der gewünschten technischen Verbesserungen resultieren durch die Abmischung verschiedener Polymere im Allgemeinen heterogene Polymerblend-Systeme. Für solche Polymerblend-Systeme sind Vorhersagen aus den Eigenschaften der Einzelkomponenten dazu, ob und in welcher Weise sie die Qualität der mit Formkörpern aus solchen Blends in Kontakt stehenden Lebensmitteln beeinflussen, für den Fachmann im Allgemeinen nicht zuverlässig möglich.

Unter Qualität des Lebensmittels wird die Beschaffenheit des Lebensmittels, beispielsweise hinsichtlich seiner Haptik, seines Aussehens (beispielsweise seiner Farbe oder seiner Oberflächenbeschaffenheit), seines Geschmacks, seines Geruchs und seines pH-Wertes verstanden.

Eine weitere Aufgabe bestand also in der Bereitstellung von erfindungsgemäßen Formkörpern gemäß einer der zuvor dargelegten Beschreibungen, wobei die Formkörper aus thermoplastischen Zusammensetzungen die Beschaffenheit des Fetts, Öls oder fetthaltigen Lebensmittels, mit denen die Formkörper bei der Verwendung des Artikels in unmittelbarem Kontakt stehen, beispielsweise hinsichtlich seiner Haptik, seines Aussehens (beispielsweise seiner Farbe oder seiner Oberflächenbeschaffenheit), seines Geschmacks, seines Geruchs und seines pH-Wertes in möglichst geringem Umfang oder besonders bevorzugt nicht beeinflussen.

Diese Formkörper sollen dabei ein möglichst ähnliches Eigenschaftsprofil hinsichtlich Zähigkeit, Steifigkeit, Wärmeformbeständigkeit und Hydrolysebeständigkeit wie Artikel aus reinem Polycarbonat aufweisen, damit die für Artikel aus Polycarbonat etablierte Verwendung und Handhabung möglichst beibehalten werden kann.

Gemäß einer speziellen Aufgabe sollen sich diese Formkörper für die Verwendung in Lebensmittelkontaktanwendungen eignen, in denen die Formkörper bestimmungsgemäß in Berührung mit Fetten, Ölen und fetthaltigen Lebensmittel bei Temperaturen von 0°C bis 100°C, besonders bei 20°C bis 80°C, insbesondere bei 30 bis 70°C kommen.

Dafür ist es erforderlich, dass in diesen Temperaturintervallen die oben beschriebene Verbesserung der Spannungsrissbeständigkeit erzielt wird. Gemäß einer weiteren speziellen Aufgabe sollen sich die Formkörper für den Kontakt mit flüssiger Schokolade und ähnlichen flüssigen kakaohaltigen Lebensmitteln eignen, insbesondere bei Temperaturen von 30 bis 70°C.

Eine weitere spezielle Aufgabe bestand in der Bereitstellung von Gießformen für fetthaltige Lebensmittel, insbesondere von Schokoladengießformen, aus thermoplastischen Zusammensetzungen mit einer gegenüber dem reinen Polycarbonat verbesserten Balance aus Schmelzefließfähigkeit und Spannungsrissbeständigkeit in Kontakt mit Fetten, Ölen und fetthaltigen Lebensmitteln, insbesondere mit flüssiger Schokolade und ähnlichen flüssigen kakaohaltigen Lebensmitteln, sowie mit einem reduzierten Glanzgrad. Die in solchen Gießformen verarbeiteten Lebensmittel werden im Allgemeinen beim Gießprozess in einem Temperaturbereich von 20 bis 80°C, besonders von 30°C bis 70°C eingesetzt. Dafür ist es erforderlich, dass in diesen Temperaturintervallen die oben beschriebene Verbesserung der Spannungsrissbeständigkeit erzielt wird.

Die erfindungsgemäßen Formkörper sowie die thermoplastischen Zusammensetzungen, aus denen diese Formkörper bestehen, müssen selbstverständlich die regulatorischen Anforderungen erfüllen, die an Kunststoffe, Formkörper und Artikel in dem jeweiligen Lebensmittelkontakt gestellt werden. Diese Anforderungen sind regional unterschiedlich und können sich im Laufe der Zeit verändern. Sie richten sich zudem nach dem betreffenden Lebensmittel und der Art der Anwendung.

Beispielsweise erfüllen müssen die Formkörper sowie die thermoplastischen Zusammensetzungen, aus denen diese Formkörper bestehen, in den Ländern der Europäischen Union die regulatorischen Anforderungen gemäß der Verordnung (EU) Nr. 10/2011 der Kommission vom 14. Januar 2011 über Materialien und Gegenstände aus Kunststoff, die dazu bestimmt sind, mit Lebensmitteln in Berührung zu kommen. Dieses bedeutet gemäß Artikel 12 der genannten EU-Verordnung beispielsweise, dass aus den aus den thermoplastischen Zusammensetzungen hergestellten Formkörpern Bestandteile nicht in Mengen von in Summe mehr als 10 mg je dm$^2$ der mit dem Lebensmittel in Berührung kommenden Formkörperflächen in Lebensmittelsimulanzien übergehen dürfen. Das zu verwendende Lebensmittelsimulanz sowie die Temperatur und Dauer des Kontaktes des Lebensmittelsimulanz mit dem Kunststoffkörper richtet sich dabei nach der beabsichtigen Anwendung und soll diese bestmöglich simulieren.

Als Lebensmittelsimulanzien kommen gemäß der oben genannten regulatorischen Anforderung in Ländern der Europäischen Union in Abhängigkeit von dem zu betrachtenden Lebensmittel insbesondere in Frage Vertreter ausgewählt aus der Gruppe bestehend aus einer Mischung von 10 Vol.-% Ethanol in Wasser, einer Mischung von 20 Vol.-% Ethanol in Wasser, einer Mischung von 50 Vol.-% Ethanol in Wasser, einer Mischung von 3 Gew.-% Essigsäure in Wasser, Pflanzenöl (beispielsweise Olivenöl oder Rapsöl), einer Mischung von 95 Vol.-% Ethanol mit 5 Vol.-% Wasser sowie Isooktan.

Für Kunststoffanwendungen in Kontakt mit Fetten, Ölen oder fetthaltigen Lebensmitteln, beispielsweise für Schokoladengiessformen, kommen als Lebensmittelsimulanz insbesondere in Frage entweder Pflanzenöl (beispielsweise Olivenöl oder Rapsöl), eine Mischung von 95 Vol.-% Ethanol mit 5 Vol.-% Wasser oder Isooktan.

In einer vereinfachten Testmethode kann auch an den als Lebensmittelsimulanz verwendeten Medien eine Untersuchung von makroskopischen physikalischen Eigenschaften wie Transmission, Haze, pH-Wert oder Leitfähigkeit nach Lagerung von Proben aus den thermoplastischen Zusammensetzungen in den Medien über einen gewissen Zeitraum vorgenommen werden. Eine verringere Transmission oder ein größerer Haze-Wert deutet dann beispielsweise auf eine Migration von Bestandteilen aus der Probe in das Lebensmittelsimulanz hin. Auf diese Art und Weise können verschiedene thermoplastische Materialien untereinander hinsichtlich ihres Einflusses auf die Beschaffenheit des Fetts, Öls oder fetthaltigen Lebensmittels, mit denen Formkörper hergestellt aus diesen Materialien bei der Verwendung von solche Formkörper enthaltenden Artikeln in unmittelbarem Kontakt stehen, verglichen werden.

Es wurde nun überraschend gefunden, dass Formkörper ausgewählt aus der Gruppe bestehend aus Geschirr, Trinkgefäßen, Besteck, Schalen, Dosen und anderen Arten von Gefäßen, Tabletts und Gießformen jeweils für fetthaltige Lebensmittel.,

bestehend aus einer thermoplastischen Zusammensetzung,

dadurch gekennzeichnet, dass die thermoplastische Zusammensetzung folgende Komponenten enthält oder aus ihnen besteht:

A) Aromatisches Polycarbonat,
B) kautschukmodifiziertes Vinyl(co)polymerisat aus

B.1) 80 bis 95 Gew.-%, bezogen auf das kautschukmodifizierte Vinyl(co)polymerisat B, Struktureinheiten abgeleitet von wenigstens einem Vinylmonomeren und

B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,

wobei das kautschukmodifizierte Vinyl(co)polymerisat B

(i) eine disperse Phase bestehend aus

(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1

und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,

wobei die disperse Phase gemäß (i) einen mittleren Durchmesser D50 gemessen per Ultrazentrifugation von 0,3 bis 2,0 μm aufweist,
C) optional mindestens eine weitere Komponente ausgewählt aus Polymeradditiven und polymeren Blendpartnern,

die erfindungsgemäßen Aufgaben erfüllen.

Es handelt sich also um Formkörper für den Lebensmittelkontakt mit Fetten, Ölen oder fetthaltigen Lebensmitteln. Für den Lebensmittelkontakt bedeutet, dass die Formkörper für den direkten Lebensmittelkontakt geeignet sind. Dazu ist es wie oben beschrieben aus regulatorischer Sicht notwendig, dass die thermoplastische Zusammensetzung sowie die daraus hergestellten Formkörper und Artikel enthaltend oder bestehend aus den Formkörpern die regulatorischen Anforderungen für Materialien sowie Formkörpern, die in Kontakt mit dem entsprechenden Lebensmittel kommen, gemäß den jeweiligen regionalen Anforderungen erfüllen. In einer bevorzugten Ausführungsform erfüllt auch jede der Einzelkomponenten A bis C der thermoplastischen Zusammensetzung diese Anforderungen.
In einer bevorzugten Ausführungsform erfüllen die Komponenten A bis C der thermoplastischen Zusammensetzung, die thermoplastischen Zusammensetzungen, die daraus hergestellten Formkörper sowie die Artikel enthaltend oder bestehend aus diesen Formkörpern die regulatorischen Anforderungen gemäß der Verordnung (EU) Nr. 10/2011 der Kommission vom 14. Januar 2011 über Materialien und Gegenstände aus Kunststoff, die dazu bestimmt sind, mit Lebensmitteln in Berührung zu kommen.
Dies bedeutet insbesondere, dass in dieser bevorzugten Ausführungsform alle Komponenten A bis C beziehungsweise, sofern es sich bei den Komponenten A bis C um Polymere handelt, alle monomeren Bausteine aus denen diese Polymere aufgebaut sind sowie alle in diesen Polymeren absichtlich verwendeten Zusatzstoffe (außer Farbstoffe) gemäß der Unionsliste der zugelassenen Monomere, sonstigen Ausgangsstoffe, durch mikrobielle Fermentation gewonnenen Makromoleküle, Zusatzstoffe und Hilfsstoffe bei der Herstellung von Kunststoffen gemäß Anhang I der zuvor genannten EU-Verordnung für den Lebensmittelkontakt grundsätzlich zugelassen sind. Die Liste in diesem Anhang I wird ausdrücklich in den Offenbarungsgehalt dieser Anmeldung mit eingeschlossen.
In einer bevorzugten Ausführungsform gilt weiterhin für aus den thermoplastischen Zusammensetzungen hergestellten Formkörpern und auch für Formkörper, die aus jeder einzelnen der Komponenten A, B sowie aus jedem einzelnen optionalen polymeren Einzelbestandteil der Komponente C hergestellt wurden, dass aus ihnen Bestandteile innerhalb von 2 Stunden bei 70°C, weiter bevorzugt innerhalb von 10 Tagen bei 40°C nicht in Mengen von in Summe mehr als 10 mg je dm$^2$ der mit einem Lebensmittelsimulanz in Berührung kommenden Formkörperoberflächen in dieses Lebensmittelsimulanz übergehen dürfen, wobei das Lebensmittelsimulanz ausgewählt ist aus der Gruppe bestehend aus Pflanzenöl (beispielsweise Olivenöl oder Rapsöl), einer Mischung von 95 Vol.-% Ethanol mit 5 Vol.-% Wasser sowie Isooktan. Ganz besonders bevorzugt handelt es sich bei dem Lebensmittelsimulanz um Isooktan.
In einer bevorzugten Ausführungsform enthalten die Komponenten A, B und optionale polymere Bestandteile der Komponente C jeweils in Summe nicht mehr als 2000 ppm, besonders bevorzugt nicht mehr als 1000 ppm an Restmonomeren und, sofern im Herstellungsprozess Lösungsmittel zum Einsatz kommen, Restlösungsmitteln.
Bevorzugt enthalten die thermoplastischen Zusammensetzungen oder bestehen aus

30-90 Gew.-%, weiter bevorzugt 40-85 Gew.-%, besonders bevorzugt 50-80 Gew.-% und ganz besonders bevorzugt 60-75 Gew.-% der Komponente A,

10-70 Gew.-%, weiter bevorzugt 10-55 Gew.-%, besonders bevorzugt 15-45 Gew.-% und ganz besonders bevorzugt 24-39 Gew.-% der Komponente B,

0-20 Gew.-%, weiter bevorzugt 0,01-20 Gew.-%, besonders bevorzugt 0,05-5 Gew.-% und ganz besonders bevorzugt 0,1-1 Gew.-% der Komponente C.

Falls außer den Komponenten A, B und C weitere Komponente in den Zusammensetzungen enthalten sind, müssen diese weiteren Komponenten ebenfalls die regulatorischen Anforderungen für den Kontaktmit Fetten, Ölen oder fetthaltigen Lebensmitteln erfüllen.

In bevorzugter Ausführungsform enthalten die Zusammensetzungen in Summe mindestens 90 Gew.-%, weiter bevorzugt mindestens 95 Gew.-% und besonders bevorzugt mindestens 99 Gew.-% an den Komponenten A, B und C. In am stärksten bevorzugter Ausführungsform bestehen die Zusammensetzungen nur aus den Komponenten A, B und C.

Die erfindungsgemäßen Formkörper eignen sich bevorzugt als Mittel für den Transport, die Verpackung, die Lagerung, die Behandlung, die Herstellung, die Konfektionierung und den Verzehr von fetthaltigen Lebensmitteln. Der Gehalt an Fetten in diesen Lebensmitteln beträgt dabei bevorzugt mindestens 5 Gew.-%, besonders bevorzugt mindestens 10 Gew.-%, weiter bevorzugt mindestens 20 Gew.-%, am stärksten bevorzugt mindestens 30 Gew.-%.

Die erfindungsgemäßen Formkörper eignen sich auch als Mittel für den Transport, die Verpackung, die Lagerung, die Behandlung, die Herstellung, die Konfektionierung und den Verzehr von Fetten und Ölen.

Die erfindungsgemäßen Formkörper eignen sich bevorzugt auch als Mittel für den Transport, die Verpackung, die Lagerung, die Behandlung, die Herstellung, die Konfektionierung und den Verzehr von fetthaltigen Lebensmitteln, Fetten und Ölen bei einer Temperatur von über 30°C, weiter bevorzugt von 40 bis 80°C, wobei die Lebensmittel also diese höhere Temperatur aufweisen. Die Eignung bedeutet, dass auch bei diesen höheren Temperaturen über 30°C, bevorzugt von 40 bis 80°C eine noch akzeptable Migration aus dem Formkörper in das Lebensmittel beziehungsweise in ein Lebensmittelsimulanz auftritt.

Bei den erfindungsgemäßen Formkörpern handelt es sich einen Vertreter ausgewählt aus der Gruppe bestehend aus Geschirr, Trinkgefäßen, Besteck, Schalen, Dosen und anderen Arten von Gefäßen, Tabletts und Gießformen für fetthaltige Lebensmittel.

In einer weiter bevorzugten Ausführungsform handelt es sich bei dem erfindungsgemäßen Formkörper um eine Gießform für Fette und fetthaltige Lebensmittel.

In einer weiter bevorzugten Ausführungsform handelt es sich bei dem erfindungsgemäßen Formkörper um eine Schokoladengießform.

Die Schokoladengießform dient beispielsweise zur Herstellung von Tafelschokolade, eines Schokoladenriegels, einer Praline oder eines Schokoladenhohlkörpers wie beispielsweise ein Schokoladenei, ein Schokoladenweihnachtsmann oder ein Schokoladenhase.

Ein weiterer Gegenstand der vorliegenden Erfindung ist auch ein Verfahren zur Herstellung eines geformten Fettes oder fetthaltigen Lebensmittels, besonders bevorzugt von Schokolade und ähnlichen, flüssigen, kakaohaltigen Lebensmitteln mit Hilfe der erfindungsgemäßen Gießformen.

Bei diesem Verfahren wird zunächst das Lebensmittel auf eine Temperatur oberhalb seines Schmelzpunktes bzw. seines Schmelztemperaturbereiches erwärmt und dadurch verflüssigt, dann in geschmolzener Form in die Gießform eingefüllt, anschließend auf eine Temperatur unterhalb seines Schmelzpunktes bzw. seines Schmelztemperaturbereiches abgekühlt und dadurch verfestigt und schließlich aus der Gießform entformt.

Ein weiterer Gegenstand der vorliegenden Erfindung ist die Verwendung von thermoplastischen Zusammensetzungen enthaltend oder bestehend aus den Komponenten A, B und C zur Herstellung von Formkörpern als Teil von Artikeln ausgewählt aus der Gruppe bestehend aus Behältern zur Verpackung, zum Servieren, zur Lagerung und/oder zum Transport von Fetten, Ölen oder fetthaltigen Lebensmitteln, Werkzeugen zum Verzehr von Fetten, Ölen oder fetthaltigen Lebensmitteln, Werkzeugen zum Herstellen, Zubereiten, Formgeben und Verarbeiten von Lebensmitteln sowie Teilen von Maschinen zum Herstellen, Zubereiten, Formgeben und Verarbeiten von Fetten, Ölen oder fetthaltigen Lebensmitteln.

Bevorzugt ist dabei die Verwendung zur Herstellung von Gießformen, weiter bevorzugt ist die Verwendung zur Herstellung von Gießformen für Fette, Öle und fetthaltige Lebensmittel, besonders bevorzugt ist die Verwendung zur Herstellung von Schokoladengießformen.

Ein weiterer Gegenstand der vorliegenden Erfindung ist die Verwendung der erfindungsgemäßen Artikel für den Transport, die Verpackung, die Lagerung, die Behandlung, die Herstellung, Zubereitung, Verarbeitung und Formgebung von Fetten, Ölen oder fetthaltigen Lebensmitteln.

## Komponente A

Als Komponente A kommt ein aromatisches Polycarbonat oder eine Mischung aus mehreren aromatischen Polycarbonaten zum Einsatz.

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Als Diphenol kommt bevorzugt 2,2-Bis-(4-hydroxyphenyl)-propan (Bisphenol-A) zum Einsatz.

Es können die Diphenole einzeln oder als beliebige Mischungen eingesetzt werden. Die Diphenole sind literaturbekannt oder nach literaturbekannten Verfahren erhältlich.

Die für die Herstellung der thermoplastischen, aromatischen Polycarbonate geeigneten Kettenabbrecher sind beispielsweise Phenol und p-tert.-Butylphenol. Die Kettenabbrecher kommen in einer Menge von im allgemeinen zwischen 0,5 Mol%, und 10 Mol%, bezogen auf die Molsumme der jeweils eingesetzten Diphenole zum Einsatz.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet können sowohl Homopolycarbonate als auch Copolycarbonate sein, sofern sie die regulatorischen Anforderungen an Lebensmittelkontakanwendungen erfüllen.

In einer bevorzugten Ausführungsform weisen die als Komponente A geeigneten aromatischen Polycarbonate ein gewichtsgemitteltes Molekulargewicht $M_w$ (ermittelt durch Gelpermeationschromatographie (GPC) in Methylenchlorid mit Polycarbonat als Standard) von 20000 g/mol bis 40000 g/mol, bevorzugt von 22000 g/mol bis 35000 g/mol, insbesondere von 24000 bis 32000 g/mol auf.

In einer bevorzugten Ausführungsform enthalten die als Komponente A geeigneten aromatischen Polycarbonate oligomere Bestandteile mit einem Molekulargewicht (ermittelt durch Gelpermeationschromatographie (GPC) in Methylenchlorid mit Polycarbonat als Standard) von weniger als 1000 Dalton in einem Anteil von nicht mehr als 2 Gew.-%, weiter bevorzugt nicht mehr als 1 Gew.-%, besonders bevorzugt nicht mehr als 0,5 Gew.-%, am stärksten bevorzugt nicht mehr als 0,2 Gew.-%.

**Komponente B**

Bei Komponente B handelt es sich um kautschukmodifizierte Vinyl(co)polymerisate aus

B.1) 80 bis 95 Gew.-%, bevorzugt 83 bis 93 Gew.-%, weiter bevorzugt 85 bis 92 Gew.-%, bezogen auf das kautschukmodifizierte Vinyl(co)polymerisat B, Struktureinheiten abgeleitet von wenigstens einem Vinylmonomeren und

B.2) 5 bis 20 Gew.-%, bevorzugt 7 bis 17 Gew.-%, weiter bevorzugt 8 bis 15 Gew.-%, bezogen auf das kautschukmodifizierte Vinyl(co)polymerisat B, einer oder mehrerer kautschukelastischer Pfropfgrundlagen mit Glasübergangstemperaturen $T_g$ < -50°C, bevorzugt von < -60°C, besonders bevorzugt < -70°C enthaltend mindestens 50 Gew.-%, bevorzugt mindestens 70 Gew.-%, besonders bevorzugt 100 Gew.-%, bezogen auf B.2, an vom 1,3-Butadien abgeleiteten Struktureinheiten,
wobei das kautschukmodifizierte Vinyl(co)polymerisat B

(i) eine disperse Phase bestehend aus

(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1

und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1

EP 3 762 457 B1

enthält,

und wobei die disperse Phase gemäß (i) einen mittleren Durchmesser D50 gemessen per Ultrazentrifugation von 0,3 bis 2,0 $\mu$m, bevorzugt von 0,5 bis 1,5 $\mu$m, insbesondere von 0,7 bis 1,2 aufweist.

Die Glasübergangstemperatur $T_g$ wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die kautschukmodifizierten Vinyl(co)polymerisate gemäß Komponente B weisen eine Schmelzeflussrate (MVR), gemessen gemäß ISO 1133 (Version von 2012) bei 220°C mit einer Stempellast von 10 kg, von bevorzugt 2 bis 20 ml/10min, besonders bevorzugt 3 bis 15 ml/10min, insbesondere 4 bis 8 ml/10min auf. Kommen Mischungen aus mehreren kautschukmodifizierten Vinyl(co)polymerisaten als Komponente B zum Einsatz, so gelten die bevorzugten MVR-Bereiche für den Mittelwert des über die Massenanteile der Komponenten in der Mischung gewichteten MVRs der Einzelkomponenten.

Derartige kautschukmodifizierte Vinyl(co)polymerisate B werden hergestellt durch Polymerisation, bevorzugt im Masse-Polymerisationsverfahren, von

B.1 80 bis 95 Gew.-%, bevorzugt 83 bis 93 Gew.-%, besonders bevorzugt 85 bis 92 Gew.-%, bezogen auf das kautschukmodifizierte Vinyl(co)polymerisat B, wenigstens eines Vinylmonomeren in Anwesenheit von

B.2 5 bis 20 Gew.-%, bevorzugt 7 bis 17 Gew.-%, besonders bevorzugt 8 bis 15 Gew.-%, bezogen auf das kautschukmodifizierte Vinyl(co)polymerisat B, einer oder mehrerer kautschukelastischer Pfropfgrundlagen mit Glasübergangstemperaturen < -50°C, bevorzugt < -60°C, besonders bevorzugt < -70°C, enthaltend mindestens 50
Gew.-%, bevorzugt mindestens 70 Gew.-%, besonders bevorzugt 100 Gew.-% bezogen auf B.2, an vom 1,3-Butadien abgeleiteten Struktureinheiten.

Bei dem zur Herstellung des kautschukmodifizierten Vinyl(co)polymerisats B bevorzugt angewandten Masse-Polymerisationsverfahren erfolgt sowohl die Polymerisation der Vinylmonomeren gemäß B.1 als auch eine Pfropfung des so entstehenden Vinyl(co)polymers auf die kautschukelastische Pfropfgrundlage gemäß B.2. Des Weiteren erfolgt bei dieser Reaktionsführung durch Selbstorganisation (Phasenseparation) die Ausbildung einer dispersen Phase (i) bestehend aus

(i.1) mit Vinyl(co)polymerisat aus Struktureinheiten gemäß B.1 gepfropften Kautschukpartikeln und

(i.2) in den Kautschukpartikeln als separierte disperse Phase eingeschlossenes Vinyl(co)polymerisat ebenfalls aus Struktureinheiten gemäß B.1,

wobei diese kautschukhaltige Phase (i) in einer nicht an die Kautschukpartikel gebundene und nicht in diese Kautschukpartikel eingeschlossene kautschukfreie Vinyl(co)polymerisat-Matrix (ii) bestehend aus Struktureinheiten gemäß B.1 dispergiert vorliegt.

Das kautschukfreie Vinyl(co)polymerisat (ii) lässt sich im Gegensatz zu den anderen Vinyl(co)polymerisat-Anteilen in der Komponente B durch geeignete Lösungsmittel wie beispielsweise Aceton herauslösen.

Die Größe der dispersen Phase (i) in den so hergestellten kautschukmodifizierten Vinyl(co)polymerisaten B wird über die Bedingungen der Reaktionsführung wie Temperatur und daraus resultierende Viskosität des Polymerisats sowie Scherung durch beispielsweise Rühren eingestellt.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-796) bestimmt.

Die Monomere B.1 sind vorzugsweise Gemische bestehend aus

B.1.1 60 bis 85 Gew.-Teilen, besonders bevorzugt 65 bis 80 Gew.-Teilen, weiter bevorzugt 70 bis 78 Gew.-Teilen, jeweils bezogen auf die Summe aus B.1.1 und B.1.2, Styrol und

B.1.2 15 bis 40 Gew.-Teilen, besonders bevorzugt 20 bis 35 Gew.-Teilen, weiter bevorzugt 22 bis 30 Gew.-Teilen, jeweils bezogen auf die Summe aus B.1.1 und B.1.2, Acrylnitril

sowie optional B.1.3 0-10 Gew.-Teilen, bevorzugt 0-7 Gew.-Teilen, weiter bevorzugt 0-5 Gew.-Teilen Methylmethacrylat oder n-Butylacrylat, jeweils bezogen auf 100 Gew.-Teile als Summe von B.1.1 und B.1.2.

In einer weiteren bevorzugten Ausführungsform handelt es sich bei den Monomeren B.1 um ein Gemisch aus 22 bis 26 Gew.-Teilen Acrylnitril und 74 bis 78 Gew.-Teilen Styrol, welches optional bis zu 10 Gew.-Teilen, besonders bevorzugt bis zu 5 Gew.-Teilen an n-Butylacrylat oder Methylmethacrylat enthalten kann, wobei die Summe der Gewichtteile an Styrol und Acrylnitril 100 Gew.-Teile ergeben.

Besonders bevorzugt ist B.1 frei von B.1.3, wobei bezüglich B.1.1 und B.1.2 die oben genannten bevorzugten Bereiche gelten.

Bevorzugte Pfropfgrundlagen B.2 sind Dienkautschuke enthaltend Butadien, oder Gemische von Dienkautschuken enthaltend Butadien oder Copolymerisate von Dienkautschuken enthaltend Butadien oder deren Gemische mit weiteren copolymerisierbaren Monomeren (z.B. gemäß B.1.1 und B.1.2).

Besonders bevorzugt als Pfropfgrundlage B.2 ist reiner Polybutadienkautschuk. In einer weiteren bevorzugten Ausführungsform handelt es sich bei B.2 um Styrol-Butadien-Blockcopolymer-Kautschuk.

Die Komponente B weist bevorzugt einen Polybutadiengehalt von 5 bis 18 Gew.-%, weiter bevorzugt von 7 bis 15 Gew.-%, insbesondere von 8 bis 13 Gew.-% auf.

Besonders bevorzugte kautschukmodifizierte Vinyl(co)polymerisate gemäß Komponente B sind Masse-ABS-Polymerisate wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Komponente B kann optional weitere kautschukmodifizierte Pfropfpolymerisate aus den Komponenten B.1 und B.2 hergestellt durch Emulsionspolymerisation enthalten.

Bevorzugt ist der Anteil dieser weiteren Pfropfpolymerisate bezogen auf die Komponente B kleiner als 30 Gew.-%, besonders bevorzugt kleiner als 15 Gew.-% und insbesondere enthält die Komponente B keine solchen weiteren Pfropfpolymerisate.

Das nicht an die Kautschukgrundlage(n) B.2 chemisch gebundene und nicht in den Kautschukpartikeln eingeschlossene Vinyl(co)polymerisat (ii) kann wie zuvor dargestellt herstellungsbedingt bei der Polymerisation der Pfropfpolymerisate B entstehen. Ebenso ist es möglich, dass ein Teil dieses nicht an die Kautschukgrundlage(n) B.2 chemisch gebundene und nicht in den Kautschukpartikeln eingeschlossene Vinyl(co)polymerisats (ii) im kautschukmodifizierten Vinyl(co)polymerisat gemäß Komponente B herstellungsbedingt bei dessen Herstellung im Masse-Polymerisationsverfahren entsteht und ein anderer Teil separat polymerisiert und der Komponente B als Bestandteil der Komponente B zugesetzt wird. Der Anteil des Vinyl(co)polymerisats (ii), unabhängig von dessen Ursprung, gemessen als in Aceton löslicher Anteil, beträgt in der Komponente B, bezogen auf die Komponente B, bevorzugt mindestens 50 Gew.-%, besonders bevorzugt mindestens 60 Gew-%, weiter bevorzugt mindestens 70 Gew.-%.

Dieses Vinyl(co)polymerisat (ii) weist in den kautschukmodifizierten Vinyl(co)polymerisaten gemäß Komponente B ein gewichtgemitteltes Molekulargewicht $M_w$ von 70 bis 250 kg/mol, bevorzugt von 130 bis 200 kg/mol, insbesondere von 150 bis 180 kg/mol auf.

Das gewichtsgemittelte Molekulargewicht $M_w$ des Vinyl(co)polymerisats (ii) in Komponente B wird im Rahmen der vorliegenden Erfindung per Gelpermeationschromatographie (GPC) in Tetrahydrofuran gegen Polystyrol als Standard gemessen.

Die Komponente B ist bevorzugt frei von Alkali-, Erdalkali-, Ammonium- oder Phosphonium-Salzen von gesättigten Fettsäuren mit 8 bis 22 Kohlenstoffatomen, Harzsäuren, Alkyl- und Alkylarylsulfonsäuren und Fettalkoholsulfaten.

Die Komponente B enthält bevorzugt weniger als 100 ppm, besonders bevorzugt weniger als 50 ppm, ganz besonders bevorzugt weniger als 20 ppm Ionen von Alkalimetallen und Erdalkalimetallen.

Als Komponente B geeignete kautschukmodifizierte Vinyl(co)polymerisate sind beispielsweise Magnum™ 3404, Magnum™ 3904, Magnum™ 8434 und Magnum™ 8391 der Firma Trinseo.

## Komponente C

Als Komponente C können optional ein Polymeradditiv, ein polymerer Blendpartner oder mehrere weitere Polymeradditive und/oder polymere Blendpartner enthalten sein.

Die Polymeradditive bzw. polymeren Blendpartner sind bevorzugt ausgewählt aus der Gruppe bestehend aus Gleit- und Entformungsmitteln, Stabilisatoren, Farbmitteln, Verträglichkeitsvermittlern, weiteren von Komponente B verschiedenen Schlagzähigkeitsmodifikatoren, weiteren von den Komponenten A bis C verschiedenen polymeren Bestandteilen (beispielsweise funktionelle Blendpartner) sowie Füll- und Verstärkungsstoffen.

In bevorzugter Ausführungsform sind keine Füll- oder Verstärkungsstoffe enthalten.

In bevorzugter Ausführungsform wird als Komponente C mindestens ein Polymeradditiv ausgewählt aus der Gruppe bestehend aus Gleit- und Entformungsmitteln und Stabilisatoren eingesetzt.

In bevorzugter Ausführungsform wird als Stabilisator mindestens ein Vertreter ausgewählt aus der Gruppe bestehend aus sterisch gehinderten Phenolen, organischen Phosphiten, und organischen oder anorganischen Brönstedt-Säuren eingesetzt.

Als Gleit-und Entformungsmittel werden in bevorzugter Ausführungsform Fettsäureester, besonders bevorzugt Fettsäureester des Pentaerythrits oder Glycerins, eingesetzt.

In einer besonders bevorzugten Ausführungsform wird als Komponente C mindestens ein Polymeradditiv ausgewählt aus der Gruppe bestehend aus C8-C22-Fettsäureester des Pentaerythrits, C8-C22-Fettsäureester des Glycerins, Tris(2,4-di-tert.-butyl-phenyl)-phosphit, 2,6-Di-tert.-butyl-4-(octadecanoxycarbonylethyl)phenol, Tetrakis(2,4-di-tert-butylphenyl)-4,4-biphenyldiphosphonit, Bis(2,4-di-tert-butylphenyl)-pentaerythritoldiphosphit und Triethylenglykol-bis[3-(3-tert-butyl-4-hydroxy-5-methylphenyl)propionat] eingesetzt.

In einer weiteren Ausführungsform enthält die Komponente C kein kautschukmodifiziertes Vinyl(co)polymerisat hergestellt durch Emulsionspolymerisation.

Die Komponenten A bis C sind so auswählen, dass sie für den Einsatz in Kunststoffen, die in Kontakt mit Lebensmitteln stehen, zugelassen sind. Dazu sind die entsprechenden regionalen regulatorischen Bedingungen zu erfüllen.

## Herstellung der Formmassen und Formkörper

Aus den erfindungsgemäßen Zusammensetzungen enthaltend oder bestehend aus den Komponenten A, B und C werden thermoplastische Formmassen hergestellt.

Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C, ganz besonders bevorzugt bei 260°C bis 290°C in üblichen Aggregaten wie beispielsweise Innenknetern, Extrudern und Doppelwellenschnecken schmelzcompoundiert und schmelzextrudiert.

Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Aus den erfindungsgemäßen Formmassen werden Formkörper hergestellt, beispielsweise durch Spritzguss, Extrusion und Blasformverfahren. Eine weitere Form der Verarbeitung ist die Herstellung von Formkörpern durch Tiefziehen aus zuvor hergestellten Platten oder Folien.

Es ist auch möglich, die Bestandteile der Zusammensetzung direkt in eine Spritzgussmaschine oder in ein Extrusionsaggregat zu dosieren und zu Formkörpern zu verarbeiten.

Die erfindungsgemäßen Artikel enthalten oder bestehen aus den beschriebenen erfindungsgemäßen Formkörpern.

In den erfindungsgemäßen Artikeln können die erfindungsgemäßen Formkörper teilweise mit anderen Materialien überzogen oder mit anderen Materialien verbunden sein. So ist es beispielsweise möglich, dass die erfindungsgemäßen Formkörper nach dem Fachmann geläufigen Verfahren mit beispielsweise Metallen, Glas, Keramik oder anderen Kunststoffen oder Kunststoff-Kompositen verstärkt, mit Griffen aus anderen Materialien versehen oder teilweise beschichtet werden.

Unter den erfindungsgemäßen Artikeln werden also solche Artikel verstanden, die nur aus den erfindungsgemäßen Formkörpern bestehen und ebenso solche Artikel, die neben den Formkörpern wie oben beschrieben verbundene Materialien oder Beschichtungen enthalten.

Bei der Verwendung des Artikels ist der Formkörper bestehend aus der thermoplastischen Zusammensetzung teilweise oder vollständig in direktem Kontakt mit den Fetten, Ölen oder fetthaltigen Lebensmittel. Das bedeutet, dass das Lebensmittel bei der Verwendung des Artikels in direktem Kontakt mit der thermoplastischen Zusammensetzung enthaltend oder bestehend aus den Komponenten A bis C steht.

Nachfolgend werden weitere Ausführungsformen 1 bis 27 der vorliegenden Erfindung beschrieben:

1. Formkörper ausgewählt aus der Gruppe bestehend aus Geschirr, Trinkgefäßen, Besteck, Schalen, Dosen und anderen Arten von Gefäßen, Tabletts und Gießformen jeweils für fetthaltige Lebensmittel.bestehend aus einer thermoplastischen Zusammensetzung, dadurch gekennzeichnet, dass die thermoplastische Zusammensetzung folgende Komponenten enthält oder aus ihnen besteht:

A) Aromatisches Polycarbonat,
B) kautschukmodifiziertes Vinyl(co)polymerisat aus

B.1) 80 bis 95 Gew.-%, bezogen auf das kautschukmodifizierte Vinyl(co)polymerisat B, Struktureinheiten abgeleitet von wenigstens einem Vinylmonomeren und

B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
wobei das kautschukmodifizierte Vinyl(co)polymerisat B

(i) eine disperse Phase bestehend aus

(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1

und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1

enthält,

wobei die disperse Phase gemäß (i) einen mittleren Durchmesser D50 gemessen per Ultrazentrifugation von 0,3 bis 2,0 µm aufweist,
C) optional mindestens eine weitere Komponente ausgewählt aus Polymeradditiven und polymeren Blendpartnern

2. Formkörper gemäß Ausführungsform 1, wobei der Formkörper und die thermoplastische Zusammensetzung die regulatorischen Anforderungen für Lebensmittelkontaktanwendungen in mindestens einem Land ausgewählt aus der Gruppe bestehend aus den Ländern der Europäischen Union, den Ländern Europas, die nicht der Europäischen Union angehören, den Vereinigten Staaten von Amerika, Russland, China, Mexiko, Japan, Südkorea, Taiwan, Kanada, Brasilien und Thailand erfüllt.

3. Formkörper gemäß Ausführungsform 1 oder 2, wobei der Formkörper geeignet für den Kontakt mit Fetten, Ölen oder fetthaltigen Lebensmitteln, die eine Temperatur von größer 30°C aufweisen, ist.

4. Formkörper gemäß einer der vorherigen Ausführungsformen, wobei in seiner Anwendung der Formkörper in Kontakt mit Fetten, Ölen oder fetthaltigen Lebensmitteln, die eine Temperatur von größer 30 °C aufweisen, ist.

5. Formkörper gemäß einer der vorherigen Ausführungsformen, wobei der Formkörper eine Gießform ist.

6. Formkörper gemäß Ausführungsform 5, wobei die Gießform eine Schokoladengießform ist.

7. Formkörper gemäß einem der vorherigen Ausführungsformen, wobei die Komponente A ein aromatisches Polycarbonat ausschließlich basierend auf Bisphenol A ist.

8. Formkörper gemäß einer der vorherigen Ausführungsformen, wobei die Komponente A ein gewichtsgemitteltes Molekulargewicht $M_w$ (ermittelt durch Gelpermeationschromatographie (GPC) in Methylenchlorid mit Polycarbonat als Standard) von 24000 bis 32000 g/mol aufweist.

9. Formkörper gemäß einer der vorherigen Ausführungsformen, wobei die Komponente B.1 ein Gemisch aus Struktureinheiten abgeleitet von Styrol und Acrylnitril, optional zusätzlich enthaltend Struktureinheiten abgeleitet von Butylacrylat oder Methylmethacrylat ist und die Komponente B.2 ausgewählt ist aus mindestens einem Vertreter der Gruppe bestehend aus Polybutadienkautschuk und Styrol-Butadien-(Block)Copolymer-Kautschuk ist.

10. Formkörper gemäß Ausführungsform 9, wobei die Komponente B.1 ein Gemisch aus Struktureinheiten abgeleitet von Styrol und Acrylnitril und die Komponente B.2 ein reiner Polybutadienkautschuk ist.

11. Formkörper gemäß einer der vorherigen Ausführungsformen enthaltend 85 bis 92 Gew.-% B.1 und 8 bis 15 Gew.-% B.2, jeweils bezogen auf B.

12. Formkörper gemäß einer der vorherigen Ausführungsformen, wobei die disperse Phase gemäß (i) einen mittleren Durchmesser D50 gemessen per Ultrazentrifugation von 0,7 bis 1,2 μm aufweist.

13. Formkörper gemäß einer der vorherigen Ausführungsformen, wobei die Komponente B einen Polybutadiengehalt von 8 bis 13 Gew.-% aufweist.

14. Formkörper gemäß einer der vorherigen Ausführungsformen, wobei die Komponente B kein kautschukmodifiziertes Vinyl(co)polymerisat hergestellt durch Emulsionspolymerisation enthält.

15. Formkörper gemäß einer der vorherigen Ausführungsformen, wobei die Komponente C kein kautschukmodifiziertes Vinyl(co)polymerisat hergestellt durch Emulsionspolymerisation enthält

16. Formkörper gemäß einer der vorherigen Ausführungsformen, wobei die Komponente B frei ist von Alkali-, Erdalkali-, Ammonium- oder Phosphonium-Salzen von gesättigten Fettsäuren mit 8 bis 22 Kohlenstoffatomen, Harzsäuren, Alkyl- und Alkylarylsulfonsäuren und Fettalkoholsulfaten.

17. Formkörper gemäß einer der vorherigen Ausführungsformen, wobei die Komponente B weniger als 20 ppm Ionen von Alkalimetallen und Erdalkalimetallen enthält.

18. Formkörper gemäß einer der vorherigen Ausführungsformen, wobei die Komponente B durch Masse-Polymerisation hergestellt wird.

19. Formkörper gemäß einem der vorherigen Ausführungsformen, wobei als Komponente C mindestens ein Polymeradditiv ausgewählt aus der Gruppe bestehend aus C8-C22-Fettsäureestern des Pentaerythrits, C8-C22-Fettsäureestern des Glycerins, Tris(2,4-di-tert.-butyl-phenyl)-phosphit, 2,6-Di-tert.-butyl-4-(octadecanoxycarbonylethyl)phenol, Tetrakis(2,4-di-tert-butylphenyl)-4,4-biphenyldiphosphonit, Bis(2,4-di-tert-butylphenyl) pentaerythritoldiphosphit und Triethylenglykol-bis[3-(3-tert-butyl-4-hydroxy-5-methylphenyl)propionat] eingesetzt wird.

20. Formkörper gemäß einem der vorherigen Ausführungsformen, wobei die thermoplastische Zusammensetzung

   30-90 Gew.-%, der Komponente A,
   10-70 Gew.-%, der Komponente B,
   0-20 Gew.-% der Komponente C enthält.

21. Formkörper gemäß einem der vorherigen Ausführungsformen, wobei die thermoplastische Zusammensetzung

   50-80 Gew.-%, der Komponente A,
   15-45 Gew.-%, der Komponente B,
   0,5-5 Gew.-% der Komponente C enthält.

22. Formkörper gemäß einem der vorherigen Ausführungsformen, wobei die thermoplastische Zusammensetzung

   60-75 Gew.-%, der Komponente A,
   24-39 Gew.-% der Komponente B und
   0,1-1 Gew.-% der Komponente C enthält.

23. Formkörper gemäß einer der vorherigen Ausführungsformen, wobei die thermoplastische Zusammensetzung aus den Komponenten A, B und C besteht.

24. Verfahren zur Herstellung eines geformten Fettes oder fetthaltigen Lebensmittels umfassend die Schritte

   a) Erwärmen des Fettes oder fetthaltigen Lebensmittels über seinen Schmelzpunkt,

   b) Einfüllen des geschmolzenen Fettes oder fetthaltigen Lebensmittels in einen Formkörper 1 gemäß einem der vorherigen Ausführungsformen 5 bis 23,

   c) Abkühlen des Fettes oder fetthaltigen Lebensmittels unterhalb seines Schmelzpunktes und

d) Entformen des in den Verfahrensschritten a) bis c) aus dem Fett oder fetthaltigen Lebensmittel hergestellten Förmlings aus dem Formkörper.

25. Verwendung einer thermoplastischen Zusammensetzung enthaltend oder bestehend aus

A) aromatischem Polycarbonat,
B) kautschukmodifiziertem Vinyl(co)polymerisat aus

B.1) 80 bis 95 Gew.-%, bezogen auf das kautschukmodifizierte Vinyl(co)polymerisat B, Struktureinheiten abgeleitet von wenigstens einem Vinylmonomeren und

B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
wobei das kautschukmodifizierte Vinyl(co)polymerisat B

(i) eine disperse Phase bestehend aus

(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1

und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1 enthält,

wobei die disperse Phase gemäß (i) einen mittleren Durchmesser D50 gemessen per Ultrazentrifugation von 0,3 bis 2,0 $\mu$m aufweist,

C) optional mindestens eine weitere Komponente ausgewählt aus Polymeradditiven und polymeren Blendpartnern

zur Herstellung eines Formkörpers als Teil eines Artikels ausgewählt aus der Gruppe bestehend aus Behältern zur Verpackung, zum Servieren, zur Lagerung und/oder zum Transport von Fetten, Ölen oder fetthaltigen Lebensmitteln, Werkzeugen zum Verzehr von Fetten, Ölen oder fetthaltigen Lebensmitteln, Werkzeugen zum Herstellen, Zubereiten, Formgeben und Verarbeiten von Fetten, Ölen oder fetthaltigen Lebensmitteln sowie Teilen von Maschinen zum Herstellen, Zubereiten, Formgeben und Verarbeiten von Fetten, Ölen oder fetthaltigen Lebensmitteln,

wobei der Formkörper bei der Verwendung des Artikels in direktem Kontakt mit den Fetten, Ölen oder fetthaltigen Lebensmitteln ist.

26. Verwendung gemäß Ausführungsform 25, wobei die Zusammensetzung

60-75 Gew.-%, der Komponente A,

24-39 Gew.-% der Komponente B und

0,1-1 Gew.-% der Komponente C enthält,

und wobei die Komponente B.1 ein Gemisch aus Styrol und Acrylnitril und die Komponente B.2 ein reiner Polybutadienkautschuk ist,

und wobei die Komponente B frei von Alkali-, Erdalkali-, Ammonium- oder Phosphonium-Salzen von gesättigten Fettsäuren mit 8 bis 22 Kohlenstoffatomen, Harzsäuren, Alkyl- und Alkylarylsulfonsäuren und Fettalkoholsulfaten ist,

und wobei die Komponente B weniger als 20 ppm Ionen von Alkalimetallen und Erdalkalimetallen enthält,

und wobei als Komponente C mindestens ein Polymeradditiv ausgewählt aus der Gruppe bestehend aus C8-C22-Fettsäureestern des Pentaerythrits, C8-C22-Fettsäureestern des Glycerins, Tris(2,4-di-tert.-butyl-phenyl)-phosphit, 2,6-Di-tert.-butyl-4-(octadecanoxycarbonylethyl)phenol, Tetrakis(2,4-di-tert-butylphenyl)-4,4-biphenyldiphosphonit, Bis(2,4-di-tert-butylphenyl) pentaerythritoldiphosphit und Triethylenglykol-bis[3-(3-tert-butyl-4-hydroxy-5-methylphenyl)propionat] eingesetzt wird.

27. Verwendung eines Artikels enthaltend oder bestehend aus einem Formkörper bestehend aus einer thermoplastischen Zusammensetzung enthaltend oder bestehend aus

A) aromatischem Polycarbonat,
B) kautschukmodifiziertem Vinyl(co)polymerisat aus

B.1) 80 bis 95 Gew.-%, bezogen auf das kautschukmodifizierte Vinyl(co)polymerisat B, Struktureinheiten abgeleitet von wenigstens einem Vinylmonomeren und

B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,

wobei das kautschukmodifizierte Vinyl(co)polymerisat B

(i) eine disperse Phase bestehend aus

(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1
und

(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,

wobei die disperse Phase gemäß (i) einen mittleren Durchmesser D50 gemessen per Ultrazentrifugation von 0,3 bis 2,0 μm aufweist,

C) optional mindestens eine weitere Komponente ausgewählt aus Polymeradditiven und polymeren Blendpartnern für den Transport, die Verpackung, die Lagerung, die Behandlung, die Herstellung, Zubereitung, Verarbeitung und Formgebung von Fetten, Ölen oder fetthaltigen Lebensmitteln, wobei der Formkörper in direktem Kontakt mit den Fetten, Ölen oder fetthaltigen Lebensmitteln ist.

## **Beispiele**

**Komponente A1:**

Lineares Polycarbonat auf Basis Bisphenol-A mit einem gewichtsgemittelten Molekulargewicht $M_W$ von 28.000 g/mol (bestimmt durch GPC bei Raumtemperatur in Methylenchlorid gegen einen BPA-PC-Standard).

**Komponente A2:**

Lineares Polycarbonat auf Basis Bisphenol-A mit einem gewichtsgemittelten Molekulargewicht $M_W$ von 25.000 g/mol (bestimmt durch GPC bei Raumtemperatur in Methylenchlorid gegen einen BPA-PC-Standard).

**Komponente A3:**

Lineares Polycarbonat auf Basis Bisphenol-A mit einem gewichtsgemittelten Molekulargewicht $M_W$ von 19.000 g/mol (bestimmt durch GPC bei Raumtemperatur in Methylenchlorid gegen einen BPA-PC-Standard).

**Komponente B-1:**

Acrylnitril-Butadien-Styrol (ABS)-Polymer, hergestellt im Masse-Polymerisationsverfahren, welches eine disperse Phase aus mit Styrol-Acrylnitril-Copolymerisat gepfropften Polybutadien-haltigen Kautschukpartikeln enthaltend als separierte disperse Phase eingeschlossenes Styrol-Acrylnitril-Copolymerisat sowie eine nicht chemisch an die Kautschukpartikel gebundene und nicht in den Kautschukpartikeln eingeschlossene Styrol-Acrylnitril-Copolymerisat-Matrix enthält. Komponente B weist ein A:B:S-Verhältnis von 23:10:67 Gew.-% und einen Gelgehalt, bestimmt als in Aceton unlöslicher Anteil, von 20 Gew.-% auf. Der in Aceton lösliche Anteil des Styrol-Acrylnitril-Copolymers in Komponente B beträgt 80 Gew.-%, bezogen auf die Komponente B, und weist ein gewichtsgemitteltes Molekulargewicht $M_W$ (gemessen per GPC in Tetrahydrofuran als Lösungsmittel mit Polystyrol als Standard) von 165 kg/mol auf. Die mittlere Partikelgröße der dispersen Phase D50, gemessen per Ultrazentrifugation, beträgt 0,85 μm. Die Schmelzeflussrate (MVR) der Komponente B1, gemessen nach ISO 1133 (Version von 2012) bei 220°C mit einer Stempellast von 10 kg, beträgt 6,7 ml/10 min.

**Komponente B-2:**

Präcompound aus 50 Gew.-% eines Pfropfpolymerisats vom ABS-Typ, hergestellt im Emulsionspolymerisationsverfahren, mit einem A:B:S-Verhältnis von 12:56:32 Gew.-% und 50 Gew.-% eines Styrol-Acrylnitril-Copolymerisats, hergestellt im Massepolymerisationsverfahren, mit einem Styrol-Acrylnitril-Verhältnis von 72:28 Gew.-% und mit einem per GPC mit Polystyrol als Standard in Dimethylformamid bei 20°C gemessenen gewichtsgemittelten Molekulargewicht Mw von 100 kg/mol.

**Komponente C1:**

Pentaerythrittetrastearat

**Komponente C2:**

    Irganox™ 1076 (BASF, Ludwigshafen, Deutschland)
    2,6-Di-tert.-butyl-4-(octadecanoxycarbonylethyl)phenol

**Herstellung und Prüfung der erfindungsgemäßen Formmassen**

Das Mischen der Komponenten erfolgte unter Good Manufacturing Practise (GMP)-Bedingungen auf einem Zweiwellenextruder ZSK-70 MC der Fa. Werner & Pfleiderer bei einer Massetemperatur von 260°C und unter Anlegen eines Unterdrucks von 100 mbar (absolut).

Die Formkörper wurden bei Massetemperaturen von 260°C bzw. 290°C und, in beiden Fällen, bei einer Werkzeugtemperatur von 80°C auf einer Spritzgießmaschine Typ Arburg 270 E hergestellt.

Die Schmelzflussrate (MVR) wurde bestimmt nach ISO 1133 (Version von 2012) bei 260°C mit einer Stempellast von 5 kg nach einer 5-minütigen Verweilzeit.

Die Kerbschlagzähigkeit nach IZOD wurde bestimmt bei 23°C gemäß ISO 180-1A (Version von 1982) an jeweils zehn Prüfkörpern der Abmessung 80 mm x 10 mm x 4mm und wird in Tabelle 1 als Mittelwert von zehn Einzelmessungen angegeben. Die Prüfkörper wurden bei einer Massetemperatur von 260°C hergestellt.

Der Vicat B/120 als Maß für die Wärmeformbeständigkeit wurde bestimmt gemäß ISO 306 (Version von 2013) an Prüfkörpern der Abmessung 80 mm x 10 mm x 4mm mit einer Stempellast von 50 N und einer Aufheizgeschwindigkeit von 120°C/h. Die Prüfkörper wurden bei einer Massetemperatur von 260°C hergestellt.

Die Schmelzeviskosität als Maß für die Schmelzefließfähigkeit wurde gemäß ISO 11443 (Version von 2014) bei Temperaturen von 260°C bzw. 300°C, in beiden Fällen bei einer Scherrate von 1000 s⁻¹ ermittelt.

Als Maß für die Beständigkeit der Formkörper in Kontakt mit Fetten, Ölen und fetthaltigen Lebensmitteln diente die Spannungsrissbeständigkeit (ESC) in Rapsöl. Bestimmt wurde die Zeit bis zum spannungsrissinduzierten Bruchversagen eines unter den zuvor beschriebenen Bedingungen spritzgegossenen Prüfkörpers der Abmessung 80 mm x 40 mm x 4 mm bei Raumtemperatur, wobei der Prüfkörper mittels einer Spannschablone mit einer externen Randfaserdehnung von 2,4 % beaufschlagt und vollständig in das Rapsöl eingetaucht wurde. Diese Messung erfolgte gemäß DIN EN ISO 22088 (Version von 2006).

Als Maß für die Hydrolysebeständigkeit der Formkörper dient die relative prozentuale Änderung der Schmelzflussrate MVR (delta MVR)

$$\text{delta MVR} = 100 \text{ x } (\text{MVR}_{\text{nach Lagerung}} - \text{MVR}_{\text{vor Lagerung}}) / \text{MVR}_{\text{vor Lagerung}},$$

wobei der MVR gemessen wird nach ISO 1133 (Version von 2012) bei 260°C mit einer Stempellast von 5 kg vor und nach einer siebentägigen Lagerung bei 95°C und 100% relativer Luftfeuchte. Die Lagerung wurde in unserem Fall an Granulat durchgeführt.

Der Oberflächenglanzgrad wurde gemessen in Reflexion unter Betrachtungswinkeln von 20° und 60° mit einem Glanzmessgerät vom Typ Haze-Gloss von BYK-Gardner GmbH (Geretsried, Deutschland) nach DIN 67530 (Version von 1982) an Prüfkörpern der Abmessung 60 mm x 40 mm x 4mm. Es wurde ein hochglanzpoliertes Spritzgusswerkzeug zur Herstellung der Prüfkörper verwendet. Die Prüfkörper wurden bei einer Massetemperatur von 260°C hergestellt.

Der Zug-E-Modul als Maß für die Steifigkeit wurde gemäß ISO 527 (Version von 1996) bei Raumtemperatur bestimmt. Die Prüfkörper wurden bei einer Massetemperatur von 260°C hergestellt.

Unter der Gesamtmigration wird gemäß der Definition in der VERORDNUNG (EU) Nr. 10/2011 DER KOMMISSION vom 14. Januar 2011 über Materialien und Gegenstände aus Kunststoff, die dazu bestimmt sind, mit Lebensmitteln in Berührung zu kommen, die Menge nichtflüchtiger Stoffe, die aus einem Material oder Gegenstand in Lebensmittelsimulanzien abgegeben werden, verstanden. Die Gesamtmigration wurde ermittelt gemäß DIN EN 1186-14 (Version von 2002) an Prüfstäben der Dimension 80 mm x 10 mm x 4 mm in einem jeweils zweistündigen vollständigen Kontakt mit a) Isooktan und b) in Ethanol (Vol.-95%) als Lebensmittelsimulanzien bei 70°C. Dazu wurde ein solcher Prüfstab mit einer Gesamtoberfläche von 0,16 dm$^2$ vollständig in jeweils 37 ml des Lebensmittelsimulanz eingetaucht. Die Prüfkörper wurden bei einer Massetemperatur von 260°C hergestellt.

Zur Simulation der Einflussnahme von Polycarbonat-Zusammensetzungen auf die Beschaffenheit unterschiedlicher Lebensmittels, mit denen Formkörper hergestellt aus diesen Polycarbonat-Zusammensetzungen bei der Verwendung von solche Formkörper enthaltenden Artikeln in unmittelbarem Kontakt stehen, wurden 100 g Granulat aus den Zusammensetzungen 1 und V5 für 2 Tage bei Raumtemperatur (RT) in jeweils 100 g unterschiedlicher Lebensmittelsimulanz-Medien gelagert. Nach der Lagerung wurde der Haze Wert (Trübung) gemäß ISO 14792 (Version 1999) der abdekantierten verwendeten Medien unter Verwendung eines Perkin Elmer Lambda 950 gemessen. Dabei deutet ein höherer Haze (Trübungs)-Wert im gleichen Medium auf eine stärkere Migration aus dem Granulat in das Medium hin und zeigt damit eine stärkere, in der Lebensmittelkontaktanwendung nicht gewünschte Beeinflussung der Lebensmittelbeschaffenheit an. Die verwendeten Medien simulieren dabei unterschiedliche Arten von Lebensmitteln.

In einem ähnlichen Test wurde das Migrationsverhaltens unter Bedingungen, wie sie bei der Herstellung eines geformten Fettes oder fetthaltigen Lebensmittel - wie etwa eines Schokoladenförmlings - mittels einer Gießform vorliegen, simuliert.

Dazu wurden jeweils 30 g Granulat der Proben 1, V2 und V5 in 30 g auf 70°C temperiertem Isooktan in einem Glaskolben unter Rühren für 2 Stunden gelagert, nachfolgend das Isooktan abdekantiert und der Haze (Trübungs)-Wert des abdekantierten Lebensmittelsimulanz gemäß ISO 14792 (Version 1999) unter Verwendung eines Perkin Elmer Lambda 950 gemessen.

**Tabelle 1:** Zusammensetzungen und ihre Eigenschaften

| Komponenten [Gew.-Teile] | 1 | V2 | V3 | V4 |
|---|---|---|---|---|
| A1 | 70 | 100 | | |
| A2 | | | 100 | |
| A3 | | | | 100 |
| B-1 | 30 | | | |
| C1 | 0,3 | | | |
| C2 | 0,1 | | | |
| **Eigenschaften** | | | | |
| ESC (Zeit bis Bruch) [h]<br>Schmelzetemperatur im Spritzguss: 260°C | >24 | >24 | | <0,01 |

(fortgesetzt)

| Eigenschaften | | | | |
|---|---|---|---|---|
| ESC (Zeit bis Bruch) [h]<br>Schmelzetemperatur im Spritzguss: 290°C | | 2,5 | 0,5 | |
| Kerbschlagzähigkeit [kJ/m$^2$] | 55 | 68 | | |
| Vicat B/120 [°C] | 133 | 146 | | |
| MVR [ml/10min] | 15 | 14 | | |
| Schmelzeviskosität (260°C) [Pa s] | 243 | 735 | 546 | 260 |
| Schmelzeviskosität (300°C) [Pa s] | | 241 | 205 | |
| Zug-E-Modul [MPa] | 2316 | 2324 | | |
| Hydrolysebeständigkeit (delta MVR) [%] | 8 | | | |
| Glanzgrad (20°) | 43 | 201 | | |
| Glanzgrad (60°) | 84 | 177 | | |
| Gesamtmigration in Isooktan | < 10 mg/dm$^2$ | nicht gemessen | | |
| Gesamtmigration in Ethanol (95%) | < 10 mg/dm$^2$ | nicht gemessen | | |

Die Daten in Tabelle 1 zeigen, dass die erfindungsgemäße Zusammensetzung 1 die technische Aufgabe erfüllt. Sie zeichnet sich durch eine gegenüber reinem Polycarbonat mit einem Molekulargewicht entsprechend dem von Komponente A in der erfindungsgemäßen Zusammensetzung (V2) verbesserte Schmelzefließfähigkeit aus. Die hergestellten Formkörper weisen eine gute Beständigkeit gegen Öl und einen niedrigeren Glanzgrad auf bei mechanischen Eigenschaften, die einem Formkörper aus dem reinen Polycarbonat ähnlich sind. Setzt man zur Erzielung einer ähnlichen Schmelzefließfähigkeit im Spritzguss wie in der erfindungsgemäßen Zusammensetzung die Temperatur bei der Verarbeitung herauf, so resultiert eine deutlich schlechtere Spannungsrissbeständigkeit der so hergestellten Formkörper gegenüber Öl. Im Vergleich zu reinem Polycarbonat mit niedrigerem Molekulargewicht, welches eine ähnliche Schmelzefließfähigkeit wie die erfindungsgemäße Zusammensetzung aufweist (V4), weist die erfindungsgemäße Zusammensetzung eine deutlich bessere Spannungsrissbeständigkeit der im Spritzguss unter vergleichbaren Bedingungen hergestellten Formkörper gegenüber Öl auf.

Tabelle 2: Zusammensetzungen und ihre Eigenschaften

| Komponenten [Gew.-Teile] | 1 | V2 | V5 |
|---|---|---|---|
| A1 | 70 | 100 | 70 |
| B-1 | 30 | | |
| B-2 | | | 30 |
| C1 | 0,3 | | 0,3 |
| C2 | 0,1 | | 0,1 |
| Eigenschaften | | | |
| Haze [%]<br>Mischung aus 90 Vol.-% Wasser und 10 Vol.-% Ethanol, 2 Tage bei RT | 2,68 | | 0,13 |
| Haze [%]<br>Mischung aus 50 Vol.-% Wasser und 50 Vol.-% Ethanol, 2 Tage bei RT | 5,53 | | 0,21 |
| Haze [%]<br>Mischung aus 97 Gew.-% Wasser und 3 Gew.-% Essigsäure, 2 Tage bei RT | 0,44 | | 0,27 |
| Haze [%]<br>Isooktan, 2 Tage bei RT | 0,19 | | 0,31 |
| Haze [%]<br>Isooktan, 2 Stunden bei 70 °C | 0,34 | 0,34 | 0,39 |

Die Daten in Tabelle 2 zeigen, dass die Zusammensetzungen 1 und V5 in deutlich unterschiedlicher Weise die Beschaffenheit der unterschiedlichen Lebenmittelsimulanz-Medien beeinflussen, obwohl beide Zusammensetzungen hinsichtlich der Anteile von Polycarbonat, ABS und Additiven vergleichbar sind. Die Haze-Werte der wässrigen Lebensmittelsimulanzien sind nach Kontakt mit der Zusammensetzung V5 deutlich geringer als nach Kontakt mit der Zusammensetzung 1, das heißt die Beschaffenheit dieser wässrigen Simulanzien wird durch die Zusammensetzung V5 deutlich weniger beeinflusst als durch die erfindungsgemäße Zusammensetzung 1. In Isooktan hingegen, das als Simulanz für fetthaltige Lebensmittel dient, ist die Trübung nach Kontakt mit der erfindungsgemäßen Zusammensetzung 1 deutlich niedriger als nach Kontakt mit der Zusammensetzung V5. Daraus kann abgeleitet werden, dass sich Zusammensetzung 1 besser für die Verwendung in Kontakt mit fetthaltigen Lebensmitteln eignet, während die Zusammensetzung V5 für den Kontakt mit wasserhaltigen Lebensmitteln wie etwa Kaffee günstiger ist.

Auch bei höher Temperatur und kürzer Kontaktzeit zwischen Lebensmittelsimulanz und Granulat zeigt sich mit Isooktan als Lebensmittelsimulanz für Fette und fetthaltige Lebensmittel mit der erfindungsgemäßen Zusammensetzung 1 eine geringere Trübung (Haze) als bei V5. Damit lässt sich auch auf eine bessere Eignung für die Verwendung zur Herstellung geformter Fette und fetthaltiger Lebensmittel, wie etwa Schokoladenförmlinge, schließen. Die Zusammensetzung V2 weist zwar ein ebenso gutes diesbezügliches Verhalten wie Zusammensetzung 1 auf, hat aber den in Tabelle 1 gezeigten Nachteil der deutlich höheren Schmelzeviskosität und des für die Anwendung zur Herstellung von Schokoladengießformen unerwünscht hohen Glanzgrades.

**Patentansprüche**

1.  Formkörper ausgewählt aus der Gruppe bestehend aus Geschirr, Trinkgefäßen, Besteck, Schalen, Dosen und anderen Arten von Gefäßen, Tabletts und Gießformen jeweils für fetthaltige Lebensmittel,
    bestehend aus einer thermoplastischen Zusammensetzung, **dadurch gekennzeichnet, dass** die thermoplastische Zusammensetzung folgende Komponenten enthält oder aus ihnen besteht:

    A) Aromatisches Polycarbonat,
    B) kautschukmodifiziertes Vinyl(co)polymerisat aus

    B.1) 80 bis 95 Gew.-%, bezogen auf das kautschukmodifizierte Vinyl(co)polymerisat B, Struktureinheiten abgeleitet von wenigstens einem Vinylmonomeren und
    B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, bestimmt mittels dynamischer Differenzkalorimetrie nach DIN EN 61006 in der Version von 1994 bei einer Heizrate von 10 K/min nach der Tangentenmethode, enthaltend mindestens 50 Gew.-%, bezogen auf B.2, an vom 1,3-Butadien abgeleiteten Struktureinheiten,

    wobei das kautschukmodifizierte Vinyl(co)polymerisat B

    (i) eine disperse Phase bestehend aus

    (i.1) mit Vinyl(co)polymerisat aus Struktureinheiten gemäß B.1 gepfropften Kautschukpartikeln und
    (i.2) in den Kautschukpartikeln als separierte disperse Phase eingeschlossenes Vinyl(co)polymerisat ebenfalls aus Struktureinheiten gemäß B.1

    und
    (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1

    enthält,
    wobei die disperse Phase gemäß (i) einen mittleren Durchmesser D50 gemessen per Ultrazentrifugation von 0,3 bis 2,0 μm aufweist,

    C) optional mindestens eine weitere Komponente ausgewählt aus Polymeradditiven und polymeren Blendpartnern

**2.** Formkörper gemäß Anspruch 1, wobei der Formkörper geeignet für den Kontakt mit Fetten, Ölen oder fetthaltigen Lebensmitteln, die eine Temperatur von größer 30°C aufweisen, ist.

**3.** Formkörper gemäß Anspruch 1 oder 2, wobei der Formkörper eine Gießform ist.

**4.** Formkörper gemäß Anspruch 3, wobei die Gießform eine Schokoladengießform ist.

**5.** Formkörper gemäß einem der vorherigen Ansprüche, wobei die Komponente A ein aromatisches Polycarbonat ausschließlich basierend auf Bisphenol A ist.

**6.** Formkörper gemäß einem der vorherigen Ansprüche, wobei die Komponente B.1 ein Gemisch aus Struktureinheiten abgeleitet von Styrol und Acrylnitril, optional zusätzlich enthaltend Struktureinheiten abgeleitet von Butylacrylat oder Methylmethacrylat ist und die Komponente B.2 ausgewählt ist aus mindestens einem Vertreter der Gruppe bestehend aus Polybutadienkautschuk und Styrol-Butadien-(Block)Copolymer-Kautschuk.

**7.** Formkörper gemäß Anspruch 6, wobei die Komponente B.1 ein Gemisch aus Struktureinheiten abgeleitet von Styrol und Acrylnitril und die Komponente B.2 ein reiner Polybutadienkautschuk ist.

**8.** Formkörper gemäß einem der vorherigen Ansprüche, wobei die Komponente B frei von Alkali-, Erdalkali-, Ammonium- oder Phosphonium-Salzen von gesättigten Fettsäuren mit 8 bis 22 Kohlenstoffatomen, Harzsäuren, Alkyl- und Alkylarylsulfonsäuren und Fettalkoholsulfaten ist.

**9.** Formkörper gemäß einem der vorherigen Ansprüche, wobei die Komponente B weniger als 20 ppm Ionen von Alkalimetallen und Erdalkalimetallen enthält.

**10.** Formkörper gemäß einem der vorherigen Ansprüche, wobei als Komponente C mindestens ein Polymeradditiv ausgewählt aus der Gruppe bestehend aus C8-C22-Fettsäureestern des Pentaerythrits, C8-C22-Fettsäureestern des Glycerins, Tris(2,4-di-tert.-butyl-phenyl)-phosphit, 2,6-Di-tert.-butyl-4-(octadecanoxycarbonylethyl)phenol, Tetrakis(2,4-di-tert-butylphenyl)-4,4-biphenyldiphosphonit, Bis(2,4-di-tert-butylphenyl)-pentaerythritoldiphosphit und Triethylenglykol-bis[3-(3-tert-butyl-4-hydroxy-5-methylphenyl)propionat] eingesetzt wird.

**11.** Artikel enthaltend oder bestehend aus einem Formkörper gemäß einem der vorhergehenden Ansprüche.

**12.** Verfahren zur Herstellung eines geformten Fettes oder fetthaltigen Lebensmittels umfassend die Schritte

a) Erwärmen des Fettes oder fetthaltigen Lebensmittels über seinen Schmelzpunkt,
b) Einfüllen des geschmolzenen Fettes oder fetthaltigen Lebensmittels in einen Formkörper gemäß einem der vorherigen Ansprüche 3 bis 10,
c) Abkühlen des Fettes oder fetthaltigen Lebensmittels unterhalb seines Schmelzpunktes und
d) Entformen des in den Verfahrensschritten a) bis c) aus dem Fett oder fetthaltigen Lebensmittel hergestellten Förmling aus dem Artikel.

**13.** Verwendung einer thermoplastischen Zusammensetzung enthaltend oder bestehend aus

A) aromatischem Polycarbonat,
B) kautschukmodifiziertem Vinyl(co)polymerisat aus

B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, bestimmt mittels dynamischer Differenzkalorimetrie nach DIN EN 61006 in der Version von 1994 bei einer Heizrate von 10 K/min nach der Tangentenmethode, enthaltend mindestens 50 Gew.-%, bezogen auf B.2, an vom 1,3-Butadien abgeleiteten Struktureinheiten,

wobei das kautschukmodifizierte Vinyl(co)polymerisat B

(i) eine disperse Phase bestehend aus

(i.1) mit Vinyl(co)polymerisat aus Struktureinheiten gemäß B.1 gepfropften Kautschukpartikeln und

(i.2) in den Kautschukpartikeln als separierte disperse Phase eingeschlossenes Vinyl(co)polymerisat ebenfalls aus Struktureinheiten gemäß B.1

und

(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1

enthält,

wobei die disperse Phase gemäß (i) einen mittleren Durchmesser D50 gemessen per Ultrazentrifugation von 0,3 bis 2,0 µm aufweist,

C) optional mindestens eine weitere Komponente ausgewählt aus Polymeradditiven und polymeren Blendpartnern

zur Herstellung eines Formkörpers als Teil eines Artikels ausgewählt aus der Gruppe bestehend aus Behältern zur Verpackung, zum Servieren, zur Lagerung und/oder zum Transport von Fetten, Ölen oder fetthaltigen Lebensmitteln, Werkzeugen zum Verzehr von Fetten, Ölen und fetthaltigen Lebensmitteln, Werkzeugen zum Herstellen, Zubereiten, Formgeben und Verarbeiten von Fetten, Ölen und fetthaltigen Lebensmitteln sowie Teilen von Maschinen zum Herstellen, Zubereiten, Formgeben und Verarbeiten von Fetten, Ölen und fetthaltigen Lebensmitteln,

wobei der Formkörper bei der Verwendung des Artikels in direktem Kontakt mit den Fetten, Ölen und fetthaltigen Lebensmittel ist.

**14.** Verwendung gemäß Anspruch 13, wobei die Zusammensetzung

60-75 Gew.-%, der Komponente A,
24-39 Gew.-% der Komponente B und
0,1-1 Gew.-% der Komponente C
enthält,
und wobei die Komponente B.1 ein Gemisch aus Styrol und Acrylnitril und die Komponente B.2 ein reiner Polybutadienkautschuk ist,
und wobei die Komponente B frei von Alkali-, Erdalkali-, Ammonium- oder Phosphonium-Salzen von gesättigten Fettsäuren mit 8 bis 22 Kohlenstoffatomen, Harzsäuren, Alkyl- und Alkylarylsulfonsäuren und Fettalkoholsulfaten ist,
und wobei die Komponente B weniger als 20 ppm Ionen von Alkalimetallen und Erdalkalimetallen enthält,
und wobei als Komponente C mindestens ein Polymeradditiv ausgewählt aus der Gruppe bestehend aus C8-C22-Fettsäureestern des Pentaerythrits, C8-C22-Fettsäureestern des Glycerins, Tris(2,4-di-tert.-butyl-phenyl)-phosphit, 2,6-Di-tert.-butyl-4-(octadecanoxycarbonylethyl)phenol, Tetrakis(2,4-di-tert-butylphenyl)-4,4-biphenyldiphosphonit, Bis(2,4-di-tert-butylphenyl)-pentaerythritoldiphosphit und Triethylenglykol-bis[3-(3-tert-butyl-4-hydroxy-5-methylphenyl)propionat] eingesetzt wird.

**15.** Verwendung eines Artikels enthaltend oder bestehend aus einem Formkörper bestehend aus einer thermoplastischen Zusammensetzung enthaltend oder bestehend aus

A) aromatischem Polycarbonat,
B) kautschukmodifiziertem Vinyl(co)polymerisat aus

B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C, bestimmt mittels dynamischer Differenzkalorimetrie nach DIN EN 61006 in der Version von 1994 bei einer Heizrate von 10 K/min nach der Tangentenmethode, enthaltend mindestens 50 Gew.-%, bezogen auf B.2, an vom 1,3-Butadien abgeleiteten Struktureinheiten,

wobei das kautschukmodifizierte Vinyl(co)polymerisat B

(i) eine disperse Phase bestehend aus

(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1

und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1

enthält,
wobei die disperse Phase gemäß (i) einen mittleren Durchmesser D50 gemessen per Ultrazentrifugation von 0,3 bis 2,0 $\mu$m aufweist,

C) optional mindestens eine weitere Komponente ausgewählt aus Polymeradditiven und polymeren Blendpartnern

für den Transport, die Verpackung, die Lagerung, die Behandlung, die Herstellung, Zubereitung, Verarbeitung und Formgebung von Fetten, Ölen und fetthaltigen Lebensmitteln, wobei der Formkörper in direktem Kontakt mit den Fetten, Ölen und fetthaltigen Lebensmittel ist.

## Claims

1. Molded body selected from the group consisting of crockery, drinking vessels, cutlery, bowls, pots and other types of vessels, trays and molds in each case for fat-containing foodstuffs
consisting of a thermoplastic composition, **characterized in that** the thermoplastic composition contains or consists of the following components:

A) aromatic polycarbonate,
B) rubber-modified vinyl (co)polymer composed of

B.1) 80% to 95% by weight, based on the rubber-modified vinyl (co)polymer B, of structural units derived from at least one vinyl monomer and
B.2) 5% to 20% by weight, based on the rubber-modified vinyl (co)polymer B, of one or more elastomeric graft substrates having glass transition temperatures < -50°C determined by differential scanning calorimetry according to DIN EN 61006, 1994 version, at a heating rate of 10 K/min by the tangent method and containing at least 50% by weight based on B.2 of structural units derived from 1,3-butadiene,

wherein the rubber-modified vinyl (co)polymer B contains

(i) a disperse phase consisting of

(i.1) rubber particles grafted with vinyl (co)polymer composed of structural units of B.1 and
(i.2) vinyl (co)polymer likewise composed of structural units of B.1 enclosed in the rubber particles as a separate disperse phase

and
(ii) a rubber-free vinyl (co)polymer matrix consisting of structural units of B.1 which is not bonded to the rubber particles and is not enclosed in these rubber particles,

wherein the disperse phase of (i) has a median diameter D50 measured by ultracentrifugation of 0.3 to 2.0 $\mu$m,

C) optionally at least one further component selected from polymer additives and polymeric blend partners.

2. Molded body according to Claim 1, wherein the molded body is suitable for contact with fats, oils or fat-containing foodstuffs having a temperature of greater than 30°C.

3. Molded body according to Claim 1 or 2, wherein the molded body is a mold.

4. Molded body according to Claim 3, wherein the mold is a chocolate mold.

5. Molded body according to any of the preceding claims, wherein component A is an aromatic polycarbonate based exclusively on bisphenol A.

6. Molded body according to any of the preceding claims, wherein the component B.1 is a mixture of structural units derived from styrene and acrylonitrile, optionally additionally containing structural units derived from butyl acrylate or methyl methacrylate, and the component B.2 is selected from at least one representative of the group consisting of polybutadiene rubber and styrenebutadiene (block) copolymer rubber.

7. Molded body according to Claim 6, wherein the component B.1 is a mixture of structural units derived from styrene and acrylonitrile and the component B.2 is a pure polybutadiene rubber.

8. Molded body according to any of the preceding claims, wherein the component B is free from alkali metal, alkaline earth metal, ammonium or phosphonium salts of saturated fatty acids having 8 to 22 carbon atoms, resin acids, alkyl- and alkylarylsulfonic acids and fatty alcohol sulfates.

9. Molded body according to any of the preceding claims, wherein the component B contains less than 20 ppm of ions of alkali metals and alkaline earth metals.

10. Molded body according to any of the preceding claims, wherein at least one polymer additive selected from the group consisting of C8-C22 fatty acid esters of pentaerythritol, C8-C22 fatty acid esters of glycerol, tris(2,4-di-tert-butylphenyl)phosphite, 2,6-di-tert-butyl-4-(octadecanoxycarbonylethyl)phenol, tetrakis(2,4-di-tert-butylphenyl)-4,4-biphenyldiphosphonite, bis(2,4-di-tert-butylphenyl) pentaerythritol diphosphite and triethylene glycol bis [3-(3-tert-butyl-4-hydroxy-5-methylphenyl)propionate] is employed as component C.

11. Article containing or consisting of a molded body according to any of the preceding claims.

12. Process for producing a molded fat or fat-containing foodstuff comprising the steps of

    a) heating the fat or fat-containing foodstuff above its melting point,
    b) filling the molten fat or fat-containing foodstuff into a molded body according to any of the preceding Claims 3 to 10,
    c) cooling the fat or fat-containing foodstuff below its melting point and
    d) demolding the molding produced from the fat or fat-containing foodstuff in process steps a) to c) from the article.

13. Use of a thermoplastic composition containing or consisting of

    A) aromatic polycarbonate,
    B) rubber-modified vinyl (co)polymer composed of

        B.1) 80% to 95% by weight, based on the rubber-modified vinyl (co)polymer B, of structural units derived from at least one vinyl monomer and
        B.2) 5% to 20% by weight, based on the rubber-modified vinyl (co)polymer B, of one or more elastomeric graft substrates having glass transition temperatures < -50°C determined by differential scanning calorimetry according to DIN EN 61006, 1994 version, at a heating rate of 10 K/min by the tangent method and containing at least 50% by weight based on B.2 of structural units derived from 1,3-butadiene,

      wherein the rubber-modified vinyl (co)polymer B contains

        (i) a disperse phase consisting of

            (i.1) rubber particles grafted with vinyl (co)polymer composed of structural units of B.1

and
(i.2) vinyl (co)polymer likewise composed of structural units of B.1 enclosed in the rubber particles as a separate disperse phase

and
(ii) a rubber-free vinyl (co)polymer matrix consisting of structural units of B.1 which is not bonded to the rubber particles and is not enclosed in these rubber particles,

wherein the disperse phase of (i) has a median diameter D50 measured by ultracentrifugation of 0.3 to 2.0 μm,

C) optionally at least one further component selected from polymer additives and polymeric blend partners for producing a molded body as part of an article selected from the group consisting of containers for packaging, for serving, for storage and/or for transport of fats, oils or fat-containing foodstuffs, tools for consumption of fats, oils and fat-containing foodstuffs, tools for production, preparation, shaping and processing of fats, oils and fat-containing foodstuffs and parts of machines for production, preparation, shaping and processing of fats, oils and fat-containing foodstuffs,
wherein during use of the article the molded body is in direct contact with the fats, oils and fat-containing foodstuffs.

14. Use according to Claim 13, wherein the composition comprises

60-75% by weight of the component A,
24-39% by weight of the component B and
0.1-1% by weight of the component C,
and wherein the component B.1 is a mixture of styrene and acrylonitrile and the component B.2 is a pure polybutadiene rubber,
and wherein the component B is free from alkali metal, alkaline earth metal, ammonium or phosphonium salts of saturated fatty acids having 8 to 22 carbon atoms, resin acids, alkyl- and alkylarylsulfonic acids and fatty alcohol sulfates,
and wherein the component B contains less than 20 ppm of ions of alkali metals and alkaline earth metals,
and wherein at least one polymer additive selected from the group consisting of C8-C22 fatty acid esters of pentaerythritol, C8-C22 fatty acid esters of glycerol, tris(2,4-di-tert-butylphenyl)phosphite, 2,6-di-tert-butyl-4-(octadecanoxycarbonylethyl)phenol, tetrakis(2,4-di-tert-butylphenyl)-4,4-biphenyldiphosphonite, bis(2,4-di-tert-butylphenyl) pentaerythritol diphosphite and triethylene glycol bis[3-(3-tert-butyl-4-hydroxy-5-methylphenyl) propionate] is employed as component C.

15. Use of an article containing or consisting of a molded body consisting of a thermoplastic composition containing or consisting of

A) aromatic polycarbonate,
B) rubber-modified vinyl (co)polymer composed of

B.1) 80% to 95% by weight, based on the rubber-modified vinyl (co)polymer B, of structural units derived from at least one vinyl monomer and
B.2) 5% to 20% by weight, based on the rubber-modified vinyl (co)polymer B, of one or more elastomeric graft substrates having glass transition temperatures < -50°C determined by differential scanning calorimetry according to DIN EN 61006, 1994 version, at a heating rate of 10 K/min by the tangent method and containing at least 50% by weight based on B.2 of structural units derived from 1,3-butadiene,

wherein the rubber-modified vinyl (co)polymer B contains

(i) a disperse phase consisting of

(i.1) rubber particles grafted with vinyl (co)polymer composed of structural units of B.1 and
(i.2) vinyl (co)polymer likewise composed of structural units of B.1 enclosed in the rubber particles as a separate disperse phase

and
(ii) a rubber-free vinyl (co)polymer matrix consisting of structural units of B.1 which is not bonded to the rubber particles and is not enclosed in these rubber particles,

wherein the disperse phase of (i) has a median diameter D50 measured by ultracentrifugation of 0.3 to 2.0 $\mu$m,

C) optionally at least one further component selected from polymer additives and polymeric blend partners

for transport, packaging, storage, treatment, production, preparation, processing and shaping of fats, oils and fat-containing foodstuffs, wherein the molded body is in direct contact with the fats, oils and fat-containing foodstuffs.

**Revendications**

1. Corps moulé choisi dans le groupe constitué par la vaisselle, les récipients à boire, les couverts, les bols, les boîtes et autres types de récipients, les plateaux et les moules de coulée, chacun pour des produits alimentaires contenant de la graisse, constitué d'une composition thermoplastique, **caractérisé en ce que** la composition thermoplastique contient ou est constituée par les composants suivants :

   A) du polycarbonate aromatique,
   B) un (co)polymère de vinyle modifié par du caoutchouc, composé de

   B.1) 80 à 95 % en poids, par rapport au (co)polymère de vinyle modifié par du caoutchouc B, d'unités structurales dérivées d'au moins un monomère de vinyle, et
   B.2) 5 à 20 % en poids, par rapport au (co)polymère de vinyle modifié par du caoutchouc B, d'une ou plusieurs bases de greffage ayant l'élasticité du caoutchouc, avec des températures de transition vitreuse < -50°C, déterminées par calorimétrie différentielle dynamique selon DIN EN 61006 dans la version de 1994 à une vitesse de chauffage de 10 K/min selon la méthode de la tangente, contenant au moins 50 % en poids, par rapport à B.2, d'unités structurales dérivées du 1,3-butadiène,

      le (co)polymère de vinyle modifié par du caoutchouc B contenant

         (i) une phase dispersée constituée de

            (i.1) des particules de caoutchouc greffées avec un (co)polymère de vinyle composé d'unités structurales selon B.1 et
            (i.2) un (co)polymère de vinyle également composé d'unités structurales selon B.1, inclus dans les particules de caoutchouc en tant que phase dispersée séparée,

         et
         (ii) une matrice de (co)polymère de vinyle sans caoutchouc, non liée aux particules de caoutchouc et non incluse dans ces particules de caoutchouc, constituée d'unités structurales selon B.1,

      la phase dispersée selon (i) présentant un diamètre moyen D50 mesuré par ultracentrifugation de 0,3 à 2,0 $\mu$m,

   C) éventuellement, au moins un autre composant choisi parmi les additifs polymères et les partenaires de mélange polymères.

2. Corps moulé selon la revendication 1, le corps moulé étant adapté pour être en contact avec des graisses, des huiles ou des produits alimentaires contenant de la graisse, qui présentent une température supérieure à 30 °C.

3. Corps moulé selon la revendication 1 ou 2, le corps moulé étant un moule de coulée.

4. Corps moulé selon la revendication 3, le moule de coulée étant un moule de coulée à chocolat.

5. Corps moulé selon l'une quelconque des revendications précédentes, le composant A étant un polycarbonate aromatique exclusivement à base de bisphénol A.

6. Corps moulé selon l'une quelconque des revendications précédentes, le composant B.1 étant un mélange d'unités structurales dérivées de styrène et d'acrylonitrile, contenant éventuellement en outre des unités structurales dérivées d'acrylate de butyle ou de méthacrylate de méthyle, et le composant B.2 étant choisi parmi au moins un membre du groupe constitué par le caoutchouc de polybutadiène et le caoutchouc de copolymère (séquencé) styrène-butadiène.

7. Corps moulé selon la revendication 6, le composant B.1 étant un mélange d'unités structurales dérivées de styrène et d'acrylonitrile et le composant B.2 étant un caoutchouc de polybutadiène pur.

8. Corps moulé selon l'une quelconque des revendications précédentes, le composant B étant exempt de sels alcalins, alcalino-terreux, d'ammonium ou de phosphonium d'acides gras saturés ayant de 8 à 22 atomes de carbone, d'acides résiniques, d'acides alkyl- et alkylarylsulfoniques et de sulfates d'alcools gras.

9. Corps moulé selon l'une quelconque des revendications précédentes, le composant B contenant moins de 20 ppm d'ions de métaux alcalins et de métaux alcalino-terreux.

10. Corps moulé selon l'une quelconque des revendications précédentes, le composant C étant au moins un additif polymère choisi dans le groupe constitué par les esters d'acides gras en C8-C22 du pentaérythritol, les esters d'acides gras en C8-C22 de la glycérine, le phosphite de tris (2,4-di-tert.-butyl-phényle), le 2,6-di-tert.-butyl-4-(octadécanoxycarbonyléthyl)phénol, le diphosphonite de tétrakis(2,4-di-tert-butylphényl)-4,4-biphényle, le diphosphite de bis(2,4-di-tert-butylphényl)-pentaérythritol et le bis[3-(3-tert-butyl-4-hydroxy-5-méthylphényl)propionate] de triéthylène-glycol.

11. Article contenant ou constitué par un corps moulé selon l'une quelconque des revendications précédentes.

12. Procédé de fabrication d'une graisse ou d'un produit alimentaire contenant de la graisse moulé, comprenant les étapes suivantes

> a) le chauffage de la graisse ou du produit alimentaire contenant de la graisse au-dessus de son point de fusion,
> b) l'introduction de la graisse ou du produit alimentaire contenant de la graisse fondu dans un corps moulé selon l'une quelconque des revendications 3 à 10 précédentes,
> c) le refroidissement de la graisse ou du produit alimentaire contenant de la graisse en dessous de son point de fusion ; et
> d) le démoulage de la pièce moulée fabriquée à partir de la graisse ou du produit alimentaire contenant de la graisse dans les étapes a) à c) du procédé de l'article.

13. Utilisation d'une composition thermoplastique contenant ou constituée par

> A) du polycarbonate aromatique,
> B) un (co)polymère de vinyle modifié par du caoutchouc, composé de

>> B.1) 80 à 95 % en poids, par rapport au (co)polymère de vinyle modifié par du caoutchouc B, d'unités structurales dérivées d'au moins un monomère de vinyle, et
>> B.2) 5 à 20 % en poids, par rapport au (co)polymère de vinyle modifié par du caoutchouc B, d'une ou plusieurs bases de greffage ayant l'élasticité du caoutchouc, avec des températures de transition vitreuse < -50°C, déterminées par calorimétrie différentielle dynamique selon DIN EN 61006 dans la version de 1994 à une vitesse de chauffage de 10 K/min selon la méthode de la tangente, contenant au moins 50 % en poids, par rapport à B.2, d'unités structurales dérivées du 1,3-butadiène,

>> le (co)polymère de vinyle modifié par du caoutchouc B contenant

>>> (i) une phase dispersée constituée de

>>>> (i.1) des particules de caoutchouc greffées avec un (co)polymère de vinyle composé d'unités structurales selon B.1
>>>> et
>>>> (i.2) un (co)polymère de vinyle également composé d'unités structurales selon B.1, inclus dans les particules de caoutchouc en tant que phase dispersée séparée,

et

(ii) une matrice de (co)polymère de vinyle sans caoutchouc, non liée aux particules de caoutchouc et non incluse dans ces particules de caoutchouc, constituée d'unités structurales selon B.1,

enthält,

la phase dispersée selon (i) présentant un diamètre moyen D50 mesuré par ultracentrifugation de 0,3 à 2,0 μm,

C) éventuellement, au moins un autre composant choisi parmi les additifs polymères et les partenaires de mélange polymères.

pour la préparation d'un corps moulé en tant que partie d'un article choisi dans le groupe constitué par les récipients pour l'emballage, le service, le stockage et/ou le transport de graisses, d'huiles ou de produits alimentaires contenant de la graisse, les outils pour la consommation de graisses, d'huiles et de produits alimentaires contenant de la graisse, les outils pour la fabrication, la préparation, la mise en forme et le traitement de graisses, d'huiles et de produits alimentaires contenant de la graisse ainsi que les parties de machines pour la fabrication, la préparation, la mise en forme et le traitement de graisses, d'huiles et de produits alimentaires contenant de la graisse,

le corps moulé étant en contact direct avec les graisses, les huiles et les produits alimentaires contenant de la graisse lors de l'utilisation de l'article.

**14.** Utilisation selon la revendication 13, la composition contenant

60 à 75 % en poids du composant A,
24 à 39 % en poids du composant B et
0,1 à 1 % en poids du composant C,
et le composant B.1 étant un mélange de styrène et d'acrylonitrile et le composant B.2 étant un caoutchouc de polybutadiène pur,
et le composant B étant exempt de sels alcalins, alcalino-terreux, d'ammonium ou de phosphonium d'acides gras saturés ayant de 8 à 22 atomes de carbone, d'acides résiniques, d'acides alkyl- et alkylarylsulfoniques et de sulfates d'alcools gras,
et le composant B contenant moins de 20 ppm d'ions de métaux alcalins et de métaux alcalino-terreux,
et le composant C étant au moins un additif polymère choisi dans le groupe constitué par les esters d'acides gras en C8-C22 du pentaérythritol, les esters d'acides gras en C8-C22 de la glycérine, le phosphite de tris(2,4-di-tert.-butyl-phényle), le 2,6-di-tert.-butyl-4-(octadécanoxycarbonyléthyl)phénol, le diphosphonite de tétrakis(2,4-di-tert-butylphényl)-4,4-biphényle, le diphosphite de bis(2,4-di-tert-butylphényl)-pentaérythritol et le bis[3-(3-tert-butyl-4-hydroxy-5-méthylphényl)propionate] de triéthylène-glycol.

**15.** Utilisation d'un article contenant ou constitué par un corps moulé constitué d'une composition thermoplastique contenant ou constituée par

A) du polycarbonate aromatique,
B) un (co)polymère de vinyle modifié par du caoutchouc, composé de

B.1) 80 à 95 % en poids, par rapport au (co)polymère de vinyle modifié par du caoutchouc B, d'unités structurales dérivées d'au moins un monomère de vinyle, et
B.2) 5 à 20 % en poids, par rapport au (co)polymère de vinyle modifié par du caoutchouc B, d'une ou plusieurs bases de greffage ayant l'élasticité du caoutchouc, avec des températures de transition vitreuse < -50°C, déterminées par calorimétrie différentielle dynamique selon DIN EN 61006 dans la version de 1994 à une vitesse de chauffage de 10 K/min selon la méthode de la tangente, contenant au moins 50 % en poids, par rapport à B.2, d'unités structurales dérivées du 1,3-butadiène,

le (co)polymère de vinyle modifié par du caoutchouc B contenant

(i) une phase dispersée constituée de

(i.1) des particules de caoutchouc greffées avec un (co)polymère de vinyle composé d'unités structurales selon B.1

et

(i.2) un (co)polymère de vinyle également composé d'unités structurales selon B.1, inclus dans les particules de caoutchouc en tant que phase dispersée séparée,

et

(ii) une matrice de (co)polymère de vinyle sans caoutchouc, non liée aux particules de caoutchouc et non incluse dans ces particules de caoutchouc, constituée d'unités structurales selon B.1,

la phase dispersée selon (i) présentant un diamètre moyen D50 mesuré par ultracentrifugation de 0,3 à 2,0 $\mu$m,

C) éventuellement, au moins un autre composant choisi parmi les additifs polymères et les partenaires de mélange polymères.

pour le transport, l'emballage, le stockage, le traitement, la fabrication, la préparation, la transformation et la mise en forme de graisses, d'huiles et de produits alimentaires contenant de la graisse, le corps moulé étant en contact direct avec les graisses, les huiles et les produits alimentaires contenant de la graisse.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0429969 B1
- DE 1283661 C
- DE 1806244 A
- EP 0531651 A3
- JP 2010035470 A
- WO 2017186690 A1
- DE 1170141 A
- US 4526926 A
- DE 1495626 B
- DE 2232877 A
- DE 2703376 A
- DE 2714544 A
- DE 3000610 A
- DE 3832396 A
- DE 2035390 A
- US 3644574 A
- DE 2248242 A
- GB 1409275 A

**In der Beschreibung aufgeführte Nicht-Patentliteratur**

- **SCHNELL**. Chemistry and Physics of Polycarbonates. Interscience Publishers, 1964
- **W. SCHOLTAN** ; **H. LANGE** ; **KOLLOID, Z.** *Z. Polymere*, 1972, vol. 250, 782-796
- **ULLMANNS**. Enzyklopädie der Technischen Chemie. 1980, vol. 19, 280